# EUROPÄISCHE PATENTSCHRIFT

(11) **EP 1 919 292 B1**
(45) Veröffentlichungstag und Bekanntmachung des Hinweises auf die Patenterteilung: **05.11.2014**
(21) Anmeldenummer: 06791730.2
(22) Anmeldetag: 30.08.2006
(51) Int. Cl.: A21B 5/02, A21C 15/02, B61B 13/08, B61D 17/00

(54) **VERFAHREN, VORRICHTUNGEN UND ANLAGEN ZUM HERSTELLEN VON DÜNNWANDIGEN FORMKÖRPERN AUS BACKMASSEN**
METHOD, DEVICES AND PLANTS FOR PRODUCTION OF THIN-WALLED MOULDED BODIES FROM BAKING MASSES
PROCEDES, DISPOSITIFS ET EQUIPEMENTS POUR FABRIQUER DES ELEMENTS MOULES A PAROIS MINCES EN PATES A CUIRE

(30) Priorität: 30.08.2005 AT 5892005
(43) Veröffentlichungstag der Anmeldung: 14.05.2008
(73) Patentinhaber: Haas Food Equipment GmbH, 1210 Wien (AT)
(72) Erfinder: NEHR, Werner, 45886 Gelsenkirchen (DE); DELUGEARD, Jacques, Bernard, Rogers, F-28130 Maintenon (FR)
(74) Vertreter: Puchberger, Peter
(86) Internationale Anmeldenummer: PCT/EP2006/008472
(87) Internationale Veröffentlichungsnummer: WO 2007/025730

(56) Entgegenhaltungen:
- EP-A- 1 661 461
- WO-A-00/27208
- WO-A-00/65918
- WO-A-95/32630
- WO-A-97/34492
- DE-A1- 19 847 443
- DE-U1-202005 013 663
- GB-A- 2 128 130
- US-A- 3 730 032
- US-A- 4 438 685
- US-A- 5 336 511
- US-B1- 6 227 103

## Beschreibung

Die Erfindung bezieht sich auf das Herstellen von dünnwandigen Formkörpern aus Backmassen.

### Stand der Technik

Aus der Waffelbacktechnologie ist es bekannt, dünnwandige Formkörper aus unterschiedlichen Backmassen herzustellen. Die Backmassen enthalten, abgesehen vom Wasser, eine mehlige Hauptkomponente, die aus einem Mehl, einer Stärke oder einer Mischung von Mehl und Stärke besteht. Die mehlige Hauptkomponente kann verschiedene Stärken und/oder verschiedene Mehle enthalten. Für die mehlige Hauptkomponente können auch modifizierte Stärken verwendet werden, wie z. B. mit organischen Säuren veresterte Stärken, mit Phosphorsäure veresterte Stärken, veretherte Stärken, vernetzte Stärken und durch ionische Wechselwirkung modifizierbare Stärken. Die Backmassen einer ersten Gruppe werden in auf die Gestalt der Formkörper abgestellte, auf- und zumachbare Backformen eingebracht und in diesen zu die Gestalt der Formkörper aufweisenden Backprodukten gebacken. Die Backmassen einer zweiten Gruppe enthalten ein in der Hitze wirksam werdendes Plastifizierungsmittel. Aus diesen Backmassen werden flache Vorprodukte gebacken, die im backwarmen Zustand plastisch verformbar sind und in diesem Zustand mechanisch umgeformt und in die Gestalt der Formkörper gebracht werden. Die in die Gestalt der Formkörper mechanisch umgeformten, flachen Vorprodukte nehmen beim Abkühlen auf Raumtemperatur eine formstabile Konsistenz an und erstarren zu dünnwandigen Formkörpern.

Die dünnwandigen Formkörper werden in vielen unterschiedlichen Gestalten hergestellt. Sie haben oft die Gestalt von ebenen, rechteckigen oder runden Blättern, oder von Tassen, Tellern, Bechern, Tüten oder Röllchen. Sie können auch als Teile von Hohlkörpern wie Kugeln, Zylindern oder Tierfiguren ausgebildet sein. Die Formkörper werden zumeist einzeln hergestellt. Als Teile von Hohlkörpern ausgebildete Formkörper werden häufig mit Hilfe von großformatigen, flachen Tafeln hergestellt. In diesen sind jeweils mehrere Hohlkörperteile nebeneinander angeordnet und durch ebene Stege miteinander verbunden. Die flachen Tafeln werden nach ihrer Herstellung zerteilt und die als Hohlkörperteile ausgebildeten Formkörper werden aus ihnen herausgeschnitten.

Eine erste Gruppe von Formkörpern wird als ihrer Gestalt entsprechende Backprodukte hergestellt. Diese Backprodukte entstehen in auf- und zumachbaren Backformen, bei denen der Backformunterteil und der Backformoberteil bei geschlossener Backform einander gegenüberliegen und zwischen sich einen der Gestalt der Formkörper entsprechenden, inneren Backhohlraum begrenzen. Zur Herstellung dieser Backprodukte wird die Backform geöffnet, eine Backmasse in den inneren Backhohlraum eingebracht, die Backform für die Dauer des Backprozesses geschlossen und die Backform erst nach dem Backprozess wieder geöffnet und das fertige Backprodukt aus der geöffneten Backform entnommen. Während des Backprozesses breitet sich die Backmasse im inneren Backhohlraum der geschlossenen Backform aus und aus der Backmasse entsteht ein den inneren Backhohlraum ausfüllender, gebackener Formkörper, der bereits den gewünschten Formkörper bzw. die Tafel darstellt, aus der der gewünschte Formkörper herausgeschnitten wird.

Zu dieser Gruppe von Formkörpern gehören z. B. ebene rechteckige Waffelblätter oder ebene runde Oblaten. Ferner Waffeltüten und Waffelbecher für Speiseeis sowie flache, runde oder eckige Teller und Tassen. Weiters in flache Tafeln integrierte und aus diesen ausgeschnittene Teile von Hohlkörpern wie Kugeln, Zylindern oder Tierfiguren.

Backformen für die Herstellung von großformatigen Formkörpern oder großformatigen flachen Tafeln weisen zumeist nur einen inneren Backhohlraum auf. Backformen mit mehreren, nebeneinander angeordneten, inneren Backhohlräumen werden zumeist für die Herstellung von kleineren Formkörpern, wie Tüten oder Becher, verwendet.

Die Formkörper der ersten Gruppe werden in größerem Maßstab zumeist in langgestreckten, mit einer umlaufenden Backzangenkette ausgerüsteten Backvorrichtungen hergestellt, in deren Backzangen die auf die Gestalt der Formkörper abgestellten Backformen aufgenommen sind. Bekannte Ausführungsbeispiele zeigen: AT 378 470 B, US 4,438,685 A, WO 96/014750 A1 und US 5,955,129 A.

Eine zweite Gruppe von Formkörpern wird durch mechanisches Umformen und anschließendes Erstarrenlassen von gebackenen, flachen Vorprodukten hergestellt. Die flachen Vorprodukte werden aus einer Backmasse hergestellt, die ein in der Hitze wirksam werdendes Plastifizierungsmittel enthält. Dieses Plastifizierungsmittel macht die gebackenen flachen Vorprodukte im backwarmen Zustand plastisch verformbar. Beim Abkühlen auf Raumtemperatur verliert es seine plastifizierende Wirkung und macht die zu Formkörpern umgeformten Vorprodukte steif. Als Plastifizierungsmittel wird zumeist ein hoher Zuckeranteil an der Backmasse eingesetzt. Zucker wird erst bei einem relativ hohen Anteil an der Backmasse zu einem in der Hitze wirksamen Plastifizierungsmittel. Dieser Zuckeranteil liegt in der Regel bei 30 % - 60 % der in der Backmasse als Hauptkomponente enthaltenen Menge an Mehl bzw. Stärke. Der Zucker kann in seiner Eigenschaft als ein in der Hitze wirksam werdendes Plastifizierungsmittel teilweise oder vollständig durch Erythrit und/oder Xylit ersetzt werden (WO 00/05966 A1).

Zum Herstellen der Formkörper wird aus einer Backmasse, die ein in der Hitze wirksam werdendes Plastifizierungsmittel enthält, ein flaches, im backwarmen Zustand plastisch verformbares Vorprodukt gebacken und dieses im plastisch verformbaren Zustand in die Gestalt des Formkörpers umgeformt und in dieser erstarren gelassen Ein solches Verfahren ist aus EP 1 661 464 bekannt. EP 1 661 464 fält unter Artikel 54(3) EPÜ.

Zu dieser Gruppe von Formkörpern gehören z. B. aus ebenen Vorproduktblättern durch Einrollen hergestellte Waffeltüten, Waffelröllchen oder Hohlhippen, oder aus ebenen Vorproduktblättern durch einen Tiefziehvorgang hergestellte Teller, Tassen und dergleichen.

Die flachen Vorprodukte werden in aus der Waffelbacktechnologie bekannten, auf- und zumachbaren Backformen hergestellt. Die Backformen bestehen jeweils aus einer oberen und einer untere Backplatte. Bei geschlossener Backform liegen die beiden Backplatten einander gegenüber und begrenzen mit ihren einander zugewandten Backflächen einen flachen seitlich offenen Backhohlraum. In diesem entsteht aus der Backmasse ein flacher, an den Backflächen der beiden Backplatten anliegender Backmassekörper, der im backwarmen Zustand plastisch verformbar ist. Dieser Backmassekörper stellt das flache Vorprodukt dar, das aus der Backform entnommen und einer Umformmaschine zugeführt wird, in der es in die Gestalt des Formkörpers mechanisch umgeformt wird.

Die Formkörper der zweiten Gruppe werden in größerem Maßstab in Anlagen hergestellt, bei denen eine Backvorrichtung zum Herstellen der flachen, plastisch verformbaren Vorprodukte mit einer Umformmaschine gekoppelt ist, die mit ihren Umformwerkzeugen die flachen Vorprodukte in die Gestalt der gewünschten Formkörper mechanisch umformt.

Für die Herstellung von gerollten Waffeltüten ist es bekannt, in einer langgestreckten, mit einer umlaufenden Backzangenkette ausgerüsteten Backvorrichtung ebene, plastisch verformbare Waffelfladen herzustellen, die an der Ausgabestation der Backvorrichtung von einer der Backplatten der geöffneten Backzangen mechanisch abgenommen und einer Umformmaschine zugeführt werden, in deren Umformwerkzeugen die ebenen Waffelfladen zu Tüten eingerollt werden. Eine solche Umformmaschine ist z. B. aus der EP 0 999 751 B1 und der US 6,227,103 B1 bekannt.

Für eine dritten Gruppe von Formkörpern wird aus einer Backmasse, die ein in der Hitze wirksam werdendes Plastifizierungsmittel enthält, ein dünnes gebackenes Band hergestellt, das im backwarmen Zustand plastisch verformbar ist und das im plastisch verformbaren Zustand mechanisch umgeformt und zu einzelnen Formkörpern verarbeitet wird, die beim Abkühlen auf Raumtemperatur eine formstabile Konsistenz annehmen. Bei der Backmasse wird als Plastifizierungsmittel - wie bei den Formkörpern der zweiten Gruppe - zumeist ein hoher Zuckeranteil an der Backmasse eingesetzt, der bei 30 % - 60 % der in der Backmasse als Hauptkomponente enthaltenen Menge an Mehl bzw. Stärke liegt. Der Zucker kann in seiner Eigenschaft als ein in der Hitze wirksam werdendes Plastifizierungsmittel teilweise oder vollständig durch Erythrit und/oder Xylit ersetzt werden (WO 00/05966 A1).

Aus der Herstellung von Waffelröllchen bzw. Hohlhippen ist es bekannt, die gebackenen, plastisch verformbaren Bänder zu langen, rohrförmigen Hülsen aufzuwickeln, von denen dann einzelne hülsenförmige Formkörper abgetrennt werden, die beim Abkühlen auf Raumtemperatur zu knusprigen, spröden Waffelröllchen bzw. Hohlhippen erstarren.

Aus der WO 95/32630 A1 und der US 5,795,607 A ist es bekannt, die gebackenen, plastisch verformbaren Bänder in einzelne plastisch verformbare Teilstücke zu zerteilen, die jeweils für sich in die Gestalt von dünnwandigen Formkörpern, wie Tüten, Tassen etc., mechanisch umgeformt werden.

Die Herstellung von gebackenen Bänder, die im backwarmen Zustand plastisch verformbar sind, ist z. B. aus WO 97/34492 A1, US 5,988,047 A, WO 00/65918 A1 und US 6,575,083 B2 bekannt.

### Zusammenfassung der Erfindung

Die Erfindung schlägt die Herstellung von dünnwandigen Formkörpern vor, die zumindest stellenweise Streugut tragen. Die dünnwandigen Formkörper werden aus Backmassen hergestellt. Das Streugut wird mit der jeweiligen Backmasse zu einem Backprodukt gebacken, bei dem das Streugut mit dem Backprodukt fest verbunden ist.

Die Erfindung schlägt mehrere Verfahren, Vorrichtungen und Anlagen für die Herstellung von dünnwandigen Formkörpern vor, die aus Backmassen hergestellt werden und zumindest stellenweise Streugut tragen.

Die Erfindung schlägt ein Verfahren zum Herstellen von dünnwandigen Formkörpern vor, bei welchem aus einer Backmasse ein der Gestalt der Formkörper entsprechendes Backprodukt in einer auf die Gestalt der Formkörper abgestellten, auf- und zumachbaren Backform hergestellt wird, bei der Backformunterteil und Backformoberteil bei geschlossener Backform einander gegenüberliegen und zwischen sich einen der Gestalt der Formkörper entsprechenden, inneren Backhohlraum begrenzen. Dieses Verfahren umfasst folgende Schritte:
(1) Öffnen der Backform,
(2) Einbringen einer Backmasse in die Backform,
(3) Schließen der Backform,
(4) Backen der Backmasse in der geschlossenen Backform, wobei aus der sich im inneren Backhohlraum der Backform ausbreitenden Backmasse ein den inneren Backhohlraum ausfüllender, gebackener Formkörper entsteht,
(5) Öffnen der Backform und
(6) Entnehmen des gebackenen, dünnwandigen Formkörpers aus der geöffneten Backform

Dieses Verfahren ist erfindungsgemäß , dadurch gekennzeichnet, dass Streugut in die geöffnete Backform eingebracht und zusammen mit der Backmasse bei geschlossener Backform zu einem den inneren Backhohlraum ausfüllenden Formkörper gebacken wird, bei dem das Streugut an zumindest einer Stelle der Oberfläche in den dünnwandigen Formkörper eingebacken ist.

Mit diesem Verfahren werden dünnwandige Formkörper hergestellt, deren Gestalt jener des inneren Backhohlraumes der Backform entspricht und die an zumindest einer Stelle ein in den Formkörper eingebackenes Streugut tragen.

Werden für die Herstellung der dünnwandigen Formkörper auf- und zumachbaren Backformen verwendet, bei denen der Backformunterteil und der Backformoberteil bei geschlossener Backform einander gegenüberliegen und dabei zwischen sich zwei oder mehrere der Gestalt der Formkörper entsprechende, innere Backhohlräume begrenzen, so wird bei jedem einzelnen inneren Backhohlraum Streugut in die geöffnete Backform eingebracht und zusammen mit der Backmasse bei geschlossener Backform in dem jeweiligen inneren Backhohlraum zu einem diesen ausfüllenden Formkörper gebacken, bei dem das Streugut an zumindest einer Stelle der Oberfläche in den dünnwandigen Formkörper eingebacken ist.

Gemäß einem weiteren Merkmal der Erfindung kann vorgesehen sein, dass Streugut vor der Backmasse auf den Backformunterteil aufgebracht und mit Backmasse überdeckt wird.

Bei dieser Verfahrensvariante entstehen dünnwandige Formkörper, die an ihrer im Backformunterteil ausgebildeten Seite Streugut tragen. Bei dieser Verfahrensvariante kann das gleiche Streugut an zwei oder mehreren Stellen auf den Backformunterteil aufgebracht und dann mit Backmasse überdeckt werden. Es kann auch unterschiedliches Streugut an zwei oder mehreren Stellen auf den Backformunterteil aufgebracht und dann mit Backmasse überdeckt werden. Auf diese Weise können dünnwandige Formkörper hergestellt werden, die zwei oder mehrere Streugutmuster tragen. Diese können sich z. B. durch die Struktur des jeweiligen Streugutes - z. B. grobkörnig, feinkörnig, blättrig etc. - oder durch dessen Farbe unterscheiden.

Gemäß einem weiteren Merkmal der Erfindung kann vorgesehen sein, dass die Backmasse vor dem Streugut auf den Backformunterteil aufgebracht und an zumindest einer Stelle mit Streugut bedeckt wird.

Bei dieser Verfahrensvariante entstehen dünnwandige Formkörper, die an ihrer im Backformoberteil ausgebildeten Seite Streugut tragen. Bei dieser Verfahrensvariante kann die auf den Backformunterteil aufgebrachte Backmasse an zwei oder mehreren Stellen mit dem gleichen oder unterschiedlichem Streugut bestreut werden. Auf diese Weise können ebenfalls dünnwandige Formkörper hergestellt werden, die unterschiedliche Streugutmuster tragen.

Gemäß einem weiteren Merkmal der Erfindung kann vorgesehen sein, dass zuerst die Backmasse bei geschlossener Backform zu einem teilweise gebackenen, formstabilen Backmassekörper gebacken wird und dass das Streugut während eines vorübergehenden Öffnens der Backform an zumindest einer Stelle auf den teilweise gebackenen Backmassekörper aufgebracht und der Streugut tragende Backmassekörper bei geschlossener Backform fertig gebacken wird.

Bei dieser Verfahrensvariante wird das Streugut auf einen erst teilweise gebackenen, aber schon formstabilen Backmassekörper aufgebracht und beim Schließen der Backform in dessen Oberfläche eingedrückt. Während der anschließenden Backphase wird aus dem Streugut tragenden Backmassekörper, der bereits die Gestalt des herzustellenden dünnwandigen Formkörpers besitzt, Streugut tragender gebackener Formkörper, bei dem das Streugut mit seiner Oberfläche fest verbunden und in diese eingedrückt ist.

Bei dieser Verfahrensvariante kann der erst teilweise gebackene, aber schon formstabile Backmassekörper auch an zwei oder mehreren Stellen mit dem gleichen oder unterschiedlichem Streugut bestreut werden. Beim Schließen der Backform wird das Streugut an der jeweiligen Stelle in den Backmassekörper eingedrückt und zusammen mit diesem während der anschließenden Backphase zum fertigen, zwei oder mehrere Streugutmuster tragenden Formkörper gebacken.

Die Erfindung schlägt weiters ein Verfahren zum Herstellen von dünnwandigen Formkörpern vor, bei welchem aus einer Backmasse, die ein in der Hitze wirksam werdendes Plastifizierungsmittel enthält, auf einer beheizten Backfläche ein flaches, im backwarmen Zustand plastisch verformbares Vorprodukt gebacken wird, das von der Backfläche abgenommen, im backwarmen Zustand mechanisch umgeformt und zu einzelnen Formkörpern verarbeitet wird, die beim Abkühlen auf Raumtemperatur eine formstabile Konsistenz annehmen. Dieses Verfahren st erfindungsgemäß dadurch gekennzeichnet, dass Streugut zusammen mit der Backmasse auf der beheizten Backfläche zu einem flachen, im backwarmen Zustand plastisch verformbaren Vorprodukt gebacken wird und dass das Streugut tragende, flache Vorprodukt von der Backfläche abgenommen, mechanisch umgeformt und zu Formkörpern verarbeitet wird.

Mit diesem Verfahren werden dünnwandige, an zumindest einer Stelle ein Streugut tragende, gebackene Formkörper hergestellt. Das Streugut wird in das flache, plastisch verformbare Vorprodukt eingebacken und gelangt während der mechanischen Umformung des gebackenen Vorproduktes an die beim fertigen Formkörper vorgesehene Stelle.

Gemäß einem weiteren Merkmal der Erfindung kann vorgesehen sein, dass Streugut vor der Backmasse auf die beheizte Backfläche aufgebracht und mit Backmasse überdeckt wird.

Bei dieser Verfahrensvariante entsteht ein flaches, im backwarmen Zustand plastisch verformbares Vorprodukt, das an seiner auf der beheizten Backfläche aufliegenden Unterseite Streugut trägt. Bei dieser Verfahrensvariante kann das gleiche Streugut an zwei oder mehreren Stellen auf die beheizte Backfläche aufgebracht und dann mit Backmasse überdeckt werden. Es kann auch unterschiedliches Streugut an zwei oder mehreren Stellen auf die beheizte Backfläche aufgebracht und dann mit Backmasse überdeckt werden. Auf diese Weise können flache Vorprodukte hergestellt werden, die zwei oder mehrere Streugutmuster tragen, die während der mechanischen Umformung der Vorprodukte an die bei den fertigen Formkörpern vorgesehenen Stellen gelangen.

Gemäß einem weiteren Merkmal der Erfindung kann vorgesehen sein, dass die Backmasse vor dem Streugut auf die beheizte Backfläche aufgebracht und anschließend an zumindest einer Stelle mit Streugut bedeckt wird.

Bei dieser Verfahrensvariante entsteht ein flaches, im backwarmen Zustand plastisch verformbares Vorprodukt, das an seiner von der beheizten Backfläche abgewandten Oberseite Streugut trägt. Bei dieser Verfahrensvariante kann die auf die beheizte Backfläche aufgebrachte Backmasse an zwei oder mehreren Stellen mit dem gleichen oder unterschiedlichem Streugut bestreut werden. Auf diese Weise können ebenfalls flache Vorprodukte hergestellt werden, die zwei oder mehrere Streugutmuster tragen, die während der mechanischen Umformung der Vorprodukte an die bei den fertigen Formkörpern vorgesehenen Stellen gelangen.

Gemäß einem weiteren Merkmal der Erfindung kann vorgesehen sein, dass die Backmasse streifenförmig aufgebracht wird und zusammen mit dem Streugut zu einem flachen Vorproduktband gebacken wird, das im backwarmen Zustand plastisch verformbar ist und an seiner Oberseite und/oder Unterseite zumindest stellenweise Streugut trägt, und dass das plastisch verformbare, Streugut tragende Vorproduktband von der Backfläche abgenommen, mechanisch umgeformt und zu einzelnen Formkörpern verarbeitet wird, die beim Abkühlen auf Raumtemperatur eine formstabile Konsistenz annehmen.

Mit dieser Verfahrensvariante werden dünnwandige, an zumindest einer Stelle ein Streugut tragende, gebackene Formkörper hergestellt. Das Streugut wird in das flache, plastisch verformbare Vorproduktband eingebacken und gelangt während der mechanischen Umformung des gebackenen Vorproduktbandes an die beim fertigen Formkörper vorgesehene Stelle.

Bei dieser Verfahrensvariante kann das gleiche oder unterschiedliches Streugut an zwei oder mehreren Stellen auf die beheizte Backfläche aufgebracht, mit Backmasse überdeckt und in die auf der beheizten Backfläche aufliegende Unterseite des Vorproduktbandes eingebacken werden.

Bei dieser Verfahrensvariante kann jeweils der auf die beheizte Backfläche aufgebrachte Backmassestreifen an zwei oder mehreren Stellen mit dem gleichen oder unterschiedlichem Streugut bestreut werden, das während der anschließenden Backphase in die von der beheizten Backfläche abgewandte Oberseite des Vorproduktbandes eingebacken wird.

Das an seiner Ober- und/oder Unterseite zwei oder mehrere Streugutmuster tragende, gebackene Vorproduktband wird von der beheizten Backfläche abgenommen und in seinem plastisch verformbaren Zustand in dünnwandige Formkörper mechanisch umgeformt, die zwei oder mehrere Streugutmuster tragen und beim Abkühlen auf Raumtemperatur eine formstabile Konsistenz annehmen. Die aus dem Streugut tragenden Vorproduktband hergestellten, dünnwandigen Formkörper können an einer Seite oder an beiden Seiten zwei oder mehrere Streugutmuster tragen, die sich hinsichtlich der Struktur des Streugutes und/oder dessen Farbe von einander unterscheiden.

Das erfindungsgemäß ein oder mehrere Streugutmuster tragende, gebackene, plastisch verformbare Vorproduktband kann in bekannter Weise zu einer langen, rohrförmigen Hülse aufgewickelt und diese in bekannter Weise in einzelne Stücke zerteilt werden, um an der Innenseite und/oder Außenseite zumindest stellenweise ein oder mehrere Streugutmuster tragende Röllchen herzustellen.

Das erfindungsgemäß ein oder mehrere Streugutmuster tragende, gebackene, plastisch verformbare Vorproduktband kann in bekannter Weise noch im flachen Zustand in einzelne Teilstücke zerteilt und diese in bekannter Weise in einzelne dünnwandige Formkörper mechanisch umgeformt werden, um an der Innenseite und/oder Außenseite zumindest stellenweise ein oder mehrere Streugutmuster tragende Tüten oder Röllchen oder an der Oberseite und/oder Unterseite ein oder mehrere Streugutmuster tragende, tiefgezogene Tassen, Teller oder Becher herzustellen.

Die Erfindung schlägt weiters Verfahren zum Herstellen von dünnwandigen Formkörpern vor, bei welchem aus einer Backmasse, die ein in der Hitze wirksam werdendes Plastifizierungsmittel enthält, ein flaches, plastisch verformbares Vorprodukt in einer auf- und zumachbaren Backform hergestellt wird, bei der obere und untere Backplatte bei geschlossener Backform einander gegenüberliegen und zwischen sich einen flachen Backhohlraum begrenzen, der zumindest stellenweise seitlich offen ist. Dieses Verfahren umfasst folgende Schritte:
(1) Öffnen der Backform,
(2) Einbringen der Backmasse in die Backform,
(3) Schließen der Backform,
(4) Backen der Backmasse in der geschlossenen Backform, wobei aus der sich zwischen den beiden Backplatten ausbreitenden Backmasse ein gebackenes, flaches Vorprodukt entsteht, das an beiden Backplatten anliegt und im backwarmen Zustand plastisch verformbar ist,
(5) Öffnen der Backform,
(6) Entnehmen des flachen, plastisch verformbaren Vorproduktes aus der Backform,
(7) Mechanisches Umformen des flachen, plastisch verformbaren Vorproduktes in die Gestalt des Formkörpers, und
(8) Erstarrenlassen des plastisch verformbaren Formkörpers,

Dieses Verfahren ist erfindungsgemäß dadurch gekennzeichnet, dass nach dem Öffnen der Backform oder nach dem Einbringen der Backmasse Streugut in die Backform eingebracht wird und dass das Streugut zusammen mit der Backmasse in einem ununterbrochenen Backprozess bei geschlossener Backform zu einem Streugut tragenden, im backwarmen Zustand plastisch verformbaren, flachen Vorprodukt gebacken wird, das nach dem Entnehmen aus der Backform zu einem Streugut tragenden Formkörper mechanisch umgeformt und als Streugut tragender Formkörper erstarren gelassen wird.

Mit diesem Verfahren werden dünnwandige, an zumindest einer Stelle ein Streugut tragende, gebackene Formkörper hergestellt. Das Streugut wird in das an beiden Seiten im Kontakt mit einer Backfläche gebackene, flache, plastisch verformbare Vorprodukt eingebacken und gelangt während der mechanischen Umformung des gebackenen Vorproduktes an die beim fertigen Formkörper vorgesehene Stelle.

Gemäß einem weiteren Merkmal der Erfindung kann vorgesehen sein, dass zuerst Streugut auf die untere Backplatte der geöffneten Backform aufgebracht und dann das Streugut mit Backmasse überdeckt wird.

Bei dieser Verfahrensvariante entsteht ein an beiden Seiten im Kontakt mit einer Backfläche gebackenes, flaches Vorprodukt, das an seiner auf der unteren Backplatte aufliegenden Unterseite Streugut trägt. Bei dieser Verfahrensvariante kann das gleiche Streugut oder auch unterschiedliches Streugut an zwei oder mehreren Stellen auf die untere Backplatte der geöffneten Backform aufgebracht und mit Backmasse überdeckt werden. Auf diese Weise können flache Vorprodukte hergestellt werden, die zwei oder mehrere Streugutmuster tragen, die während der mechanischen Umformung der Vorprodukte an die bei den fertigen Formkörpern vorgesehenen Stellen gelangen.

Gemäß einem weiteren Merkmal der Erfindung kann vorgesehen sein, dass zuerst Backmasse auf die untere Backplatte der geöffneten Backform aufgebracht und dann die Backmasse an zumindest einer Stelle mit Streugut bedeckt wird.

Bei dieser Verfahrensvariante entsteht ein an beiden Seiten im Kontakt mit einer Backfläche gebackenes, flaches Vorprodukt, das an seiner von der unteren Backplatte abgewandten Oberseite Streugut trägt. Bei dieser Verfahrensvariante kann die auf die untere Backplatte aufgebrachte Backmasse an zwei oder mehreren Stellen mit dem gleichen oder unterschiedlichem Streugut bestreut werden. Auf diese Weise können ebenfalls flache Vorprodukte hergestellt werden, die zwei oder mehrere Streugutmuster tragen, die während der mechanischen Umformung der Vorprodukte an die bei den fertigen Formkörpern vorgesehenen Stellen gelangen.

Die erfindungsgemäß ein oder mehrere Streugutmuster tragenden, im Kontakt mit beiden Backplatten gebackenen, plastisch verformbaren, flachen Vorprodukte können in bekannter Weise einzeln in dünnwandige Formkörper mechanisch umgeformt werden, um an der Innenseite und/oder Außenseite zumindest stellenweise ein oder mehrere Streugutmuster tragende Tüten oder Röllchen oder an der Oberseite und/oder Unterseite ein oder mehrere Streugutmuster tragende, tiefgezogene Tassen, Teller oder Becher herzustellen.

Die Erfindung schlägt weiters eine Backvorrichtung zum Herstellen von dünnwandigen Formkörpern vor. In dieser Backvorrichtung sind in auf- und zumachbaren Backzangen aufgenommene, auf- und zumachbare Backformen vorgesehen, die im Gestell der Backvorrichtung einen geschlossenen Kreislauf durchlaufen. Entlang der Umlaufbahn der Backzangen ist eine Beschickungsstation zum Einbringen von Backmasse in die geöffneten Backformen, ein Backraum zum Backen der Formkörper und eine Ausgabestation zum Ausgeben der gebackenen Formkörper aus den geöffnete Backformen angeordnet. Diese Backvorrichtung ist erfindungsgemäß , dadurch gekennzeichnet, dass in der Umlaufbahn der Backzangen ein von geöffneten Backzangen durchlaufener Bahnabschnitt vorgesehen ist, in dem die Beschickungsstation für die Backmasse und zumindest eine Beschickungsstation zum Einbringen von Streugut in die geöffneten Backformen angeordnet sind.

In der Backvorrichtung werden die umlaufenden Backzangen während ihres Umlaufes zum Öffnen und Schließen der in ihnen enthaltenen Backformen geöffnet und geschlossen. Die für die Herstellung der dünnwandigen Formkörper vorgesehene Backmasse wird in der Backmasse-Beschickungsstation der Backvorrichtung portionsweise in die geöffneten Backformen eingebracht. In den geschlossenen Backformen entstehen aus den Backmasseportionen die inneren Backhohlräume der Backformen ausfüllende, dünnwandige Formkörper, deren Gestalt jeweils jener des inneren Backhohlraumes der betreffenden Backform entspricht. In der StreugutBeschickungsstation wird Streugut in die geöffneten Backformen eingebracht und zusammen mit der Backmasse zu dünnwandigen Formkörpern gebacken, die an zumindest einer Stelle ein Streugut tragen. Die Streugut tragenden Formkörper werden an der Ausgabestation aus den geöffnete Backformen entnommen.

Gemäß einem weiteren Merkmal der Erfindung kann vorgesehen sein, dass in dem von geöffneten Backzangen durchlaufenen Bahnabschnitt zumindest eine Beschickungsstation für Streugut vor der Beschickungsstation für die Backmasse angeordnet ist.

Bei dieser Ausführungsform der Backvorrichtung wird zuerst Streugut auf den Backformunterteil der geöffnete Backform aufgebracht und dann das Streugut von der später aufgebrachten Backmasse überdeckt. In dieser Backvorrichtung werden dünnwandige Formkörper hergestellt, die an ihrer im Backformunterteil ausgebildeten Seite ein Streugutmuster tragen. Bei einer solchen Backvorrichtung können auch zwei oder mehrere Beschickungsstationen für Streugut vor der Beschickungsstation für die Backmasse angeordnet sein, um dünnwandigen Formkörper herstellen zu können, die ihrer im Backformunterteil ausgebildeten Seite zwei oder mehrere Streugutmuster tragen.

Gemäß einem weiteren Merkmal der Erfindung kann bei der Backvorrichtung vorgesehen sein, dass in dem von geöffneten Backzangen durchlaufener Bahnabschnitt der Beschickungsstation für die Backmasse zumindest eine Beschickungsstation für Streugut nachgeordnet ist.

Bei dieser Ausführungsform der Backvorrichtung wird zuerst Backmasse auf den Backformunterteil der geöffnete Backform aufgebracht und dann die Backmasse mit Streugut bestreut. In dieser Backvorrichtung werden dünnwandige Formkörper hergestellt, die an ihrer im Backformoberteil ausgebildeten Seite ein Streugutmuster tragen. Bei einer solchen Backvorrichtung können nach der Beschickungsstation für die Backmasse auch zwei oder mehrere Beschickungsstationen für Streugut angeordnet sein, um dünnwandigen Formkörper herstellen zu können, die an ihrer im Backformoberteil ausgebildeten Seite zwei oder mehrere Streugutmuster tragen.

Gemäß einem weiteren Merkmal der Erfindung kann bei der Backvorrichtung vorgesehen sein, dass in dem von geöffneten Backzangen durchlaufenen Bahnabschnitt vor der Beschickungsstation für die Backmasse zumindest eine Beschickungsstation für Streugut und nach der Beschickungsstation für die Backmasse zumindest eine weitere Beschickungsstation für Streugut angeordnet ist.

In dieser Backvorrichtung werden dünnwandige Formkörper hergestellt, die an ihrer Oberseite und an ihrer Unterseite Streugut tragen. Bei einer solchen Backvorrichtung können auch vor und nach der Beschickungsstation für die Backmasse jeweils zwei oder mehrere Beschickungsstationen für Streugut angeordnet sein, um dünnwandigen Formkörper herstellen zu können, die an ihrer Oberseite und an ihrer Unterseite jeweils zwei oder mehrere Streugutmuster tragen.

In dem der Beschickungsstation für Streugut zugeordneten Bahnabschnitt können auch zwei oder mehrere Beschickungsstationen für Streugut angeordnet sein, um dünnwandige Formkörper herstellen zu können, die zwei oder mehrere Streugutmuster tragen.

Die Erfindung schlägt weiters eine Anlage zum Herstellen von dünnwandigen, aus flachen, plastisch verformbaren Vorprodukten geformten Formkörpern vor. Diese Anlage umfasst eine Backvorrichtung zum Herstellen der flachen, plastisch verformbaren Vorprodukte und eine mit der Ausgabestation der Backvorrichtung gekoppelte Umformmaschine zum mechanischen Umformen der flachen, plastisch verformbaren Vorprodukte in die dünnwandigen Formkörper, die beim Abkühlen auf Raumtemperatur eine formstabile Konsistenz annehmen. Die Backvorrichtung der Anlage sieht auf- und zumachbare Backformen vor, die im geschlossenen Zustand einen flachen, seitlich offenen, inneren Backhohlraum begrenzen und in auf- und zumachbaren Backzangen aufgenommen sind, die im Gestell der Backvorrichtung einen geschlossenen Kreislauf durchlaufen. Entlang der Umlaufbahn der Backzangen ist eine Beschickungsstation zum Einbringen von Backmasse in die geöffneten Backformen, ein Backraum zum Backen der flachen Vorprodukte und eine Ausgabestation für die gebackenen, flachen Vorprodukte angeordnet Diese Anlage ist erfindungsgemäß dadurch gekennzeichnet, dass in der Backvorrichtung an der Umlaufbahn der Backzangen ein von geöffneten Backzangen durchlaufener Bahnabschnitt vorgesehen ist, in dem die Beschickungsstation für die Backmasse und zumindest eine Beschickungsstation (23) zum Einbringen von Streugut in die geöffneten Backformen angeordnet sind.

In der Backvorrichtung der Anlage werden die umlaufenden Backzangen während ihres Umlaufes zum Öffnen und Schließen der Backformen geöffnet und geschlossen. Die für die Herstellung der plastisch verformbaren Vorprodukte vorgesehene Backmasse, die ein in der Hitze wirksam werdendes Plastifizierungsmittel enthält, wird in der Backmasse-Beschickungsstation der Backvorrichtung portionsweise in die geöffneten Backformen eingebracht. Die Backmasseportionen werden in den seitlich offenen, inneren Backhohlräumen der geschlossenen Backformen zu flachen, plastisch verformbaren Vorprodukten gebacken. In der Streugut-Beschickungsstation wird Streugut in die geöffneten Backformen eingebracht und zusammen mit der Backmasse zu flachen, plastisch verformbaren Vorprodukten gebacken, die an zumindest einer Stelle ein Streugut tragen. Die flachen, Streugut tragenden Vorprodukte werden an der Ausgabestation der Backvorrichtung einzeln vom Backformoberteil oder vom Backformunterteil der geöffneten Backformen mechanisch abgenommen und an die angeschlossene Umformmaschine übergeben. In der Umformmaschine werden die flachen, plastisch verformbaren, an zumindest einer Stelle ein Streugut tragenden Vorprodukte von einem oder mehreren Umformwerkzeugen zu dünnwandigen, an zumindest einer Stelle ein Streugut tragenden Formkörpern mechanisch umgeformt. Diese Formkörper werden noch in den Umformwerkzeugen der Umformmaschine oder außerhalb der Umformmaschine abgekühlt, bis sie eine formstabile Konsistenz angenommen haben und nicht mehr mechanisch verformbar sind.

Die Umformmaschine der Anlage kann in der Ausgabestation der Backvorrichtung oberhalb Backzangenbahn angeordnet sein und mehrere Umformwerkzeuge besitzen, die entlang einer in sich geschlossenen Umlaufbahn umlaufen und mit ihrer eigenen Umlaufbewegung die flachen, Streugut tragenden Vorprodukte von den Backformoberteilen der geöffneten Backformen mechanisch abnehmen, bevor sie diese in das jeweilige Umformwerkzeug einziehen, dort z. B. zu einer Tüte oder einem Röllchen einrollen.

Die Anlage zum Herstellen von dünnwandigen, aus flachen, plastisch verformbaren Vorprodukten geformten, zumindest stellenweise ein Streugut tragenden Formkörpern kann auch eine neben der Backvorrichtung angeordnete Umformmaschine aufweisen, der die von den Backformunterteilen der geöffneten Backformen abgenommenen, Streugut tragenden Vorprodukte zugeführt werden. Die Backvorrichtung der Anlage ist an der Ausgabestation mit einer den Backformunterteilen der geöffneten Backformen zugeordneten, mechanischen Abnahmevorrichtung versehen. Diese nimmt die flachen, Streugut tragenden Vorprodukte von den Backformunterteilen der geöffneten Backformen ab und führt sie einer Übergabevorrichtung zu. Diese erfasst die flachen, Streugut tragenden Vorprodukte und gibt sie an die Umformmaschine weiter.

Die neben der Backvorrichtung angeordnete Umformmaschine kann ein einziges Umformwerkzeug besitzen, dem die flachen, Streugut tragenden Vorprodukte einzeln zugeführt werden. Dieses Umformwerkzeug kann als Tiefziehwerkzeug ausgebildet sein, das ein flaches Vorprodukt, das als eine ebene, kreisrunde Scheibe ausgebildet ist, durch einen Tiefziehvorgang in einen flachen Teller mechanisch umformt, der das gewünschte Streugutmuster trägt. Dieses Umformwerkzeug kann als Tiefziehwerkzeug ausgebildet sein, das ein flaches Vorprodukt, das als ein ebenes, rechteckiges Blatt ausgebildet ist, durch einen Tiefziehvorgang in eine flache rechteckige Tasse mechanisch umformt, die an der gewünschten Stelle ein Streugutmuster trägt.

Die neben der Backvorrichtung angeordnete Umformmaschine kann auch mehrere Umformwerkzeuge besitzen, die entlang einer in sich geschlossenen Umlaufbahn umlaufen und die ihnen von der Übergabevorrichtung zugeführten, flachen, Streugut tragenden Vorprodukte in das jeweilige Umformwerkzeug einziehen und dort, je nach Bauart der Umformwerkzeuge z. B. zu einer Tüte oder einem Röllchen einrollen.

Gemäß einem weiteren Merkmal der Erfindung kann bei der Backvorrichtung der Anlage vorgesehen sein, dass in dem von geöffneten Backzangen durchlaufenen Bahnabschnitt zumindest eine Beschickungsstation für Streugut vor der Beschickungsstation für die Backmasse angeordnet ist.

Bei dieser Ausführungsform der Anlage wird in der Backvorrichtung zuerst Streugut auf den Backformunterteil einer geöffneten Backform aufgebracht. Dann wird das Streugut mit einer Backmasse überdeckt, die ein in der Hitze wirksam werdendes Plastifizierungsmittel enthält. Anschließend wird die Backzange für die restliche Dauer des Backprozesses geschlossen.

Bei dieser Ausführungsform der Anlage werden in der Backvorrichtung flache, dünnwandige Vorprodukte hergestellt, die an ihrer im Backformunterteil ausgebildeten Seite ein Streugutmuster tragen. Die flachen Vorprodukte werden in der Umformmaschine der Anlage zu einem Streugut tragenden Formkörper mechanisch umgeformt, wobei das Streugutmuster während der mechanischen Umformung des jeweiligen Vorproduktes an die beim fertigen Formkörper vorgesehene Stelle gelangt.

Bei dieser Ausführungsform der Anlage können in der Backvorrichtung auch zwei oder mehrere Beschickungsstationen für Streugut nach der Beschickungsstation für die Backmasse angeordnet sein, um flache, dünnwandige Vorprodukte herstellen zu können, die an ihrer im Backformunterteil ausgebildeten Seite zwei oder mehrere Streugutmuster tragen, die dann während der mechanischen Umformung der Vorprodukte in der Umformmaschine der Anlage an die bei den fertigen Formkörpern vorgesehenen Stellen gelangen.

Gemäß einem weiteren Merkmal der Erfindung kann bei der Backvorrichtung der Anlage vorgesehen sein, dass in dem von geöffneten Backzangen durchlaufener Bahnabschnitt der Beschickungsstation für die Backmasse zumindest eine Beschickungsstation für Streugut nachgeordnet ist.

Bei dieser Ausführungsform der Anlage wird in der Backvorrichtung zuerst eine Backmasse, die ein in der Hitze wirksam werdendes Plastifizierungsmittel enthält, auf den Backformunterteil einer geöffneten Backform aufgebracht. Dann wird die Backmasse mit Streugut bestreut und die Backzange für die restliche Dauer des Backprozesses geschlossen.

Bei dieser Ausführungsform der Anlage werden in der Backvorrichtung flache, dünnwandige Vorprodukte hergestellt, die an ihrer im Backformoberteil ausgebildeten Seite ein Streugutmuster tragen, das dann während der mechanischen Umformung des Vorproduktes in der Umformmaschine der Anlage an die beim fertigen Formkörper vorgesehene Stelle gelangt.

Bei dieser Ausführungsform der Anlage können in der Backvorrichtung nach der Beschickungsstation für die Backmasse auch zwei oder mehrere Beschickungsstationen für Streugut angeordnet sein, um flache, dünnwandige Vorprodukte herstellen zu können, die an ihrer im Backformoberteil ausgebildeten Seite zwei oder mehrere Streugutmuster tragen, die dann während der mechanischen Umformung der Vorprodukte in der Umformmaschine der Anlage an die bei den fertigen Formkörpern vorgesehene Stellen gelangen.

Gemäß einem weiteren Merkmal der Erfindung kann bei der Backvorrichtung der Anlage vorgesehen sein, dass in dem von geöffneten Backzangen durchlaufenen Bahnabschnitt vor der Beschickungsstation für die Backmasse zumindest eine Beschickungsstation für Streugut und nach der Beschickungsstation für die Backmasse zumindest eine weitere Beschickungsstation für Streugut angeordnet ist.

Bei dieser Ausführungsform der Anlage wird in der Backvorrichtung zuerst ein erstes Streugut auf den Backformunterteil einer geöffneten Backform aufgebracht. Dann wird das erste Streugut mit einer Backmasse überdeckt, die ein in der Hitze wirksam werdendes Plastifizierungsmittel enthält. Anschließend wird die Backmasse mit einem zweiten Streugut bestreut und dann die Backzange für die restliche Dauer des Backprozesses geschlossen.

Bei dieser Ausführungsform der Anlage werden in der Backvorrichtung flache, dünnwandige Vorprodukte hergestellt, die an ihrer Oberseite und an ihrer Unterseite Streugut tragen, das dann während der mechanischen Umformung der gebackenen Vorprodukte in der Umformmaschine der Anlage an die bei den fertigen Formkörpern vorgesehenen Stellen gelangt.

Bei dieser Ausführungsform der Anlage können in der Backvorrichtung vor und nach der Beschickungsstation für die Backmasse jeweils zwei oder mehrere Beschickungsstationen für Streugut angeordnet sein, um flache, dünnwandige Vorprodukte herstellen zu können, die an ihrer Oberseite und an ihrer Unterseite jeweils zwei oder mehrere Streugutmuster tragen, die während der mechanischen Umformung der Vorprodukte in der Umformmaschine der Anlage an die bei den fertigen Formkörpern vorgesehenen Stellen gelangen.

Gemäß einem weiteren Merkmal der Erfindung kann vorgesehen sein, dass die Beschickungsstation für Streugut mit einer Streuvorrichtung versehen ist, die einen die Backzangenbahn in Querrichtung übergreifenden Ausleger besitzt, der einen oberhalb der Bahn der Backzangen angeordneten Streukopf für die Abgabe von Streugut trägt.

Die Streuvorrichtung kann einen Vorratsbehälter aufweisen, aus dem das Streugut entnommen und zum Ausleger befördert und entlang diesem zum Streukopf befördert wird. Am Streukopf wird das Streugut aus der Streuvorrichtung ausgegeben. Das Streugut fällt auf die unterhalb vom Streukopf an diesem vorbeibewegten Backformunterteile der geöffneten Backformen und dort auf die Backflächen der Backformunterteile oder auf die auf diesen Backflächen angeordnete Backmasse.

Die Streuvorrichtung kann stationär neben der Umlaufbahn der Backzangen angeordnet sein und das Streugut intermittierend an die geöffneten Backformen abgeben, die unterhalb vom Streukopf an diesem vorbeibewegt werden.

Die Streuvorrichtung kann neben der Umlaufbahn der Backzangen parallel zur Bahn der Backzangen hin und her bewegbar angeordnet sein und mit den geöffneten Backformen während der Streugutabgabe in Laufrichtung der Backzangen mitbewegt werden. Diese Streuvorrichtung wird neben der Bahn der Backzangen intermittierend hin und her bewegt. Während der Streugutabgabe wird die Streuvorrichtung mit der betreffenden Backzange in Laufrichtung der Backzangen vorwärts bewegt. Nach der Streugutabgabe wird die Streuvorrichtung entgegen der Laufrichtung der Backzangen zurück in ihre Ausgangsposition zurückgefahren. Anschließend wird die Streuvorrichtung bei der nächsten Backzange wieder während der Streugutabgabe mit der Backzange in Laufrichtung der Backzangen vorwärts bewegt.

Die Streuvorrichtung kann eine das Streugut in einen fließfähigen Förderstrom verwandelnde Fördereinrichtung aufweisen. Bei dieser Ausbildung der Streuvorrichtung wird das Streugut in einen fließfähigen Förderstrom verwandelt, der entlang dem Ausleger zum Streukopf geleitet und dort ausgegeben wird. Dabei kann die für jede Backzange vorgesehene Streugutmenge durch eine zeitlich begrenzte Unterbrechung des Förderstromes erzeugt werden.

Die Streuvorrichtung kann eine dem Streukopf vorgelagerte Dosiereinrichtung für das Streugut enthalten.

Die Streuvorrichtung kann eine intermittierend arbeitende, mit einer Waage versehene Dosiereinrichtung für das Streugut besitzen.

Der Dosiereinrichtung kann eine das dosierte Streugut in einen gleichmäßigen Förderstrom verwandelnde Fördereinrichtung nachgeordnet sein.

Das Streugut wird in der Streuvorrichtung zum Streukopf befördert, der es über die zu bestreuende Fläche verteilt..

Der Streukopf kann mit einer Leiteinrichtung für das Streugut versehen sein.

Die Streugut-Leiteinrichtung kann mit das Streugut über den zu bestreuenden Bereich verteilenden Leitelementen versehen sein.

Die Streugut-Leitelemente können als horizontal ausgerichtete Stäbe ausgebildet sein.

Als Streugut-Leiteinrichtung kann ein vorzugsweise horizontal angeordnetes Streugitter vorgesehen sein.

Die Streugut-Leiteinrichtung kann mit einer den Umriss des zu bestreuenden Bereiches definierenden Umrandung versehen sein.

In der Beschickungsstation für Streugut können auch zwei oder mehrere Streuvorrichtungen vorgesehen sein, die an verschieden Stellen gleiches oder unterschiedliches Streugut in die im geöffneten Zustand an ihnen vorbeibewegten Backformen einbringen.

Die erfindungsgemäßen Verfahren, Vorrichtungen und Anlagen sehen die Herstellung von dünnwandigen Formkörpern vor, die aus Backmassen hergestellt werden und zumindest stellenweise Streugut tragen. Das Streugut ist in die Oberfläche des Formkörpers eingebacken. Das Streugut kann pulverförmig, feinkörnig, grobkörnig, stiftförmig, blättrig, oder kleinstückig sein.

Bei der Herstellung von essbaren Formkörpem mit in die Oberfläche eingebackenem Streugut können unterschiedliche Produkte als Streugut eingesetzt werden. Dies kann ein rieselfähiges Gut sein, wie z. B. Obstbeeren, Pflanzensamen, Getreidekörner, grobkörniges Salz, verschiedene Gewürze etc., oder durch Zerkleinern hergestellte, allenfalls getrocknete oder geröstete Teilstücke von Früchten, Obst, Nüssen, Pflanzen, Seetang, Gewürzen, Kräutern, Pilzen etc, oder zu Pulver, Mehl, Flocken oder rieselfähigen Stücken verarbeitete Sorten oder Mischungen von Früchten, Obst, Nüsse, Pflanzen, Getreide, Algen, Gewürzen, Kräutern oder Pilzen.

Nachstehend wird die Erfindung anhand von einigen in den angeschlossenen Zeichnungen dargestellten Ausführungsbeispielen von erfindungsgemäßen Vorrichtungen und Anlagen näher erläutert.

### Kurze Beschreibung der Zeichnungen

In den Zeichnungen zeigen:
- Fig. 1: eine Anlage zum Herstellen von dünnwandigen, Streugut tragenden Formkörpern in Draufsicht,
- Fig. 2: einen Längsschnitt durch die Backvorrichtung der Anlage von Fig. 1,
- Fig. 3: einen Querschnitt durch die Backvorrichtung der Anlage von Fig. 1 im Bereich der Streugutbeschickungsstation,
- Fig. 3a: eine vergrößerte Darstellung des an der Streugutbeschickungsstation in die geöffneten Backzangen hineinragenden, horizontalen Auslegers der Streuvorrichtung,
- Fig.: 3b eine Draufsicht auf die Fig. 3a mit dem über der unteren Zangenhälfte einer geöffneten Backzange angeordneten Streukopf,
- Fig. 4: eine Seitenansicht der Fig. 3 mit Blickrichtung auf die hochgeklappte, obere Zangenhälfte einer geöffneten Backzange, in die der horizontale Ausleger der Streuvorrichtung mit seinem Streukopf hineinragt,
- Fig. 5: eine zweite Ausführungsform einer Anlage zum Herstellen von dünnwandigen, Streugut tragenden Formkörpern in Draufsicht,
- Fig. 6: einen Längsschnitt durch die Backvorrichtung der Anlage von Fig. 5
- Fig. 7: eine dritte Ausführungsform einer Anlage zum Herstellen von dünnwandigen, Streugut tragenden Formkörpern in Draufsicht
- Fig. 8: einen Längsschnitt durch die Backvorrichtung der Anlage von Fig. 7
- Fig. 9: eine Ausführungsform einer Anlage, die nucht Teil der Erfindung ist, zum Herstellen von dünnwandigen, Streugut tragenden Formkörpern in Draufsicht,
- Fig. 10: einen Längsschnitt durch die Backvorrichtung der Anlage von Fig. 9,
- Fig. 11: einen Querschnitt durch die Backvorrichtung der Anlage von Fig. 9 im Bereich der Streugutbeschickungsstation,
- Fig. 12: verschiedene Ausführungsformen von dünnwandigen, Streugut tragenden Formkörpern, und
- Fig. 13: schematisch einen Längsschnitt durch eine Backvorrichtung zum Herstellen von dünnwandigen, Streugut tragenden Formkörpern.

### Beschreibung von Ausführungsbeispielen

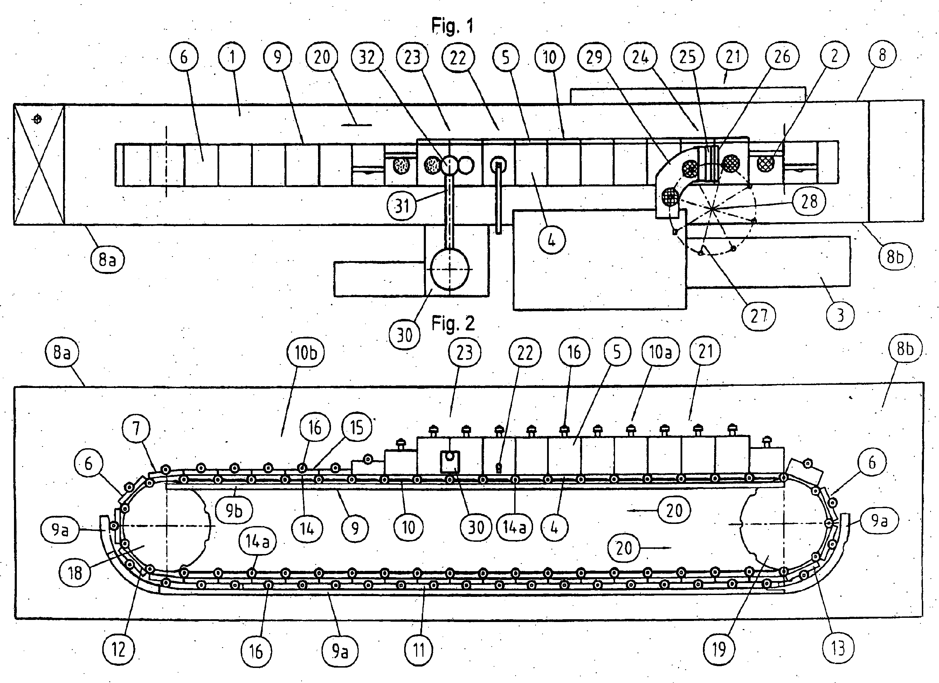

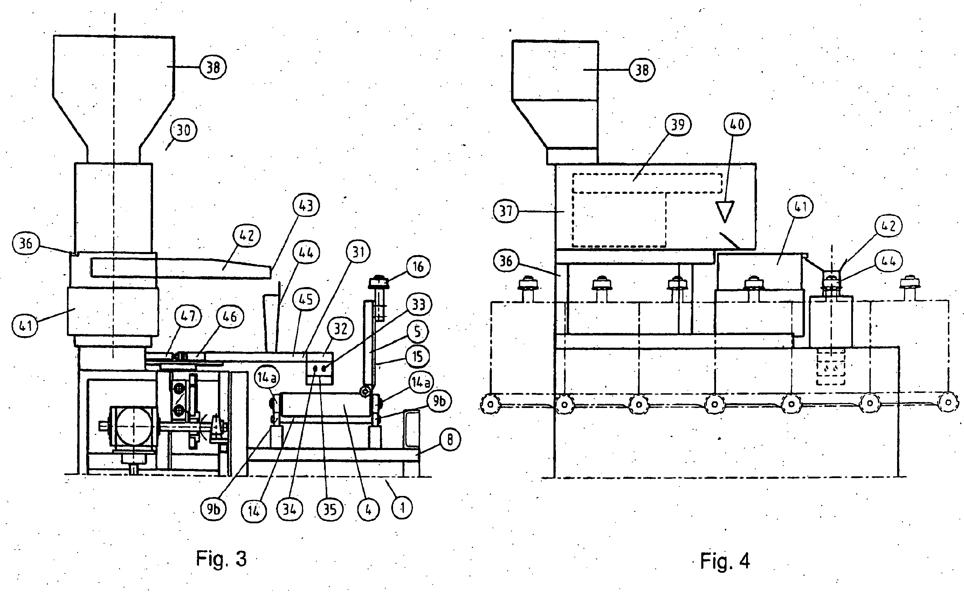

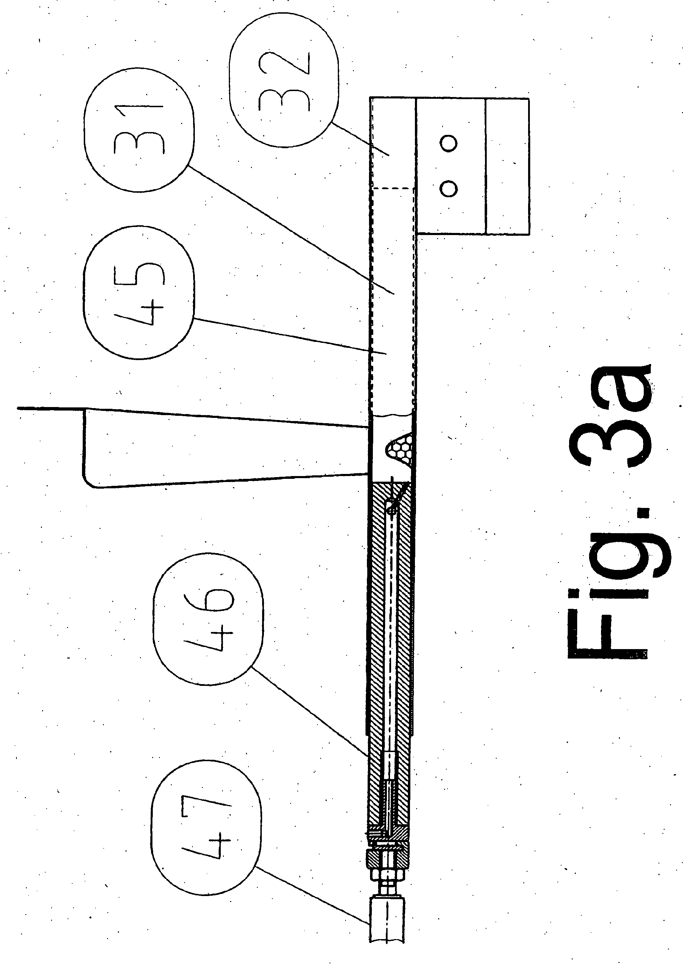

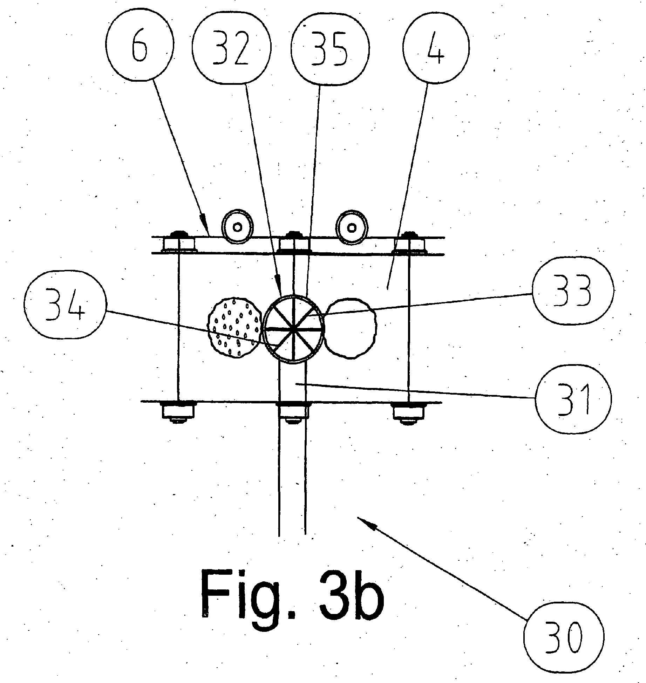

Die Fig. 1 - 4 zeigen eine Anlage zum Herstellen von dünnwandigen Formkörpern, die aus flachen, plastisch verformbaren Vorprodukten geformt werden und an zumindest einer Stelle ein Streugut tragen. In dieser Anlage werden in einer Backvorrichtung 1 flache, plastisch verformbare Vorprodukte 2 hergestellt, die an der Oberseite an zumindest einer Stelle ein Streugut tragen. Die flachen Vorprodukte 2 werden in der Umformmaschine 3 der Anlage aus ihrer flachen Gestalt in die davon abweichende Gestalt der Formkörper mechanisch umgeformt. Bei diesem mechanischen Umformvorgang kommt das an der Oberseite eines flachen Vorproduktes 2 angeordnete Streugut an die beim Formkörper für des Streugut vorgesehene Stelle.

Die Anlage sieht eine Backvorrichtung 1 vor, die mit auf- und zümachbare Backformen ausgerüstet ist, in denen die flachen, an der Oberseite ein Streugut tragenden Vorprodukte 2 zwischen zwei ebenen Backplatten 4, 5 hergestellt werden. Die Backformen sind mit ihren Backplatten 4, 5 in den Backzangen 6 einer endlosen Backzangenkette 7 aufgenommen, die im langgestreckten Gestell 8 der Backvorrichtung 1 entlang einer in sich geschlossenen Umlaufbahn 9 in Längsrichtung umläuft. Die Umlaufbahn 9 umfasst zwei horizontale Bahnabschnitte 10 und 11, die übereinander angeordnet und in den Endabschnitten 8a, 8b des Gestells durch halbkreisförmige Bahnabschnitte 12 bzw. 13 miteinander verbunden sind.

Die Backzangen 6 bzw. die in diesen enthaltenen Backformen werden von der umlaufenden Backzangenkette 7 durch die Backvorrichtung 1 transportiert.

Die Backzangen 6 sind entlang der Umlaufbahn 9 in Längsrichtung hintereinander angeordnet. Sie besitzen jeweils eine untere Zangenhälfte 14 und eine mit dieser über ein Gelenk schwenkbar verbundene, obere Zangenhälfte 15. Das Gelenk der Backzange 6 besitzt eine zur Laufrichtung der Backzangen 6 parallele Schwenkachse. Es ist an dem der Rückseite der Backvorrichtung 1 benachbarten, hinteren Rand der Backzange 6 angeordnet. Die untere Zangenhälfte 14 enthält die untere Backplatte 4 einer Backform und die obere Zangenhälfte 15 enthält die obere Backplatte 5 einer Backform. Die untere Zangenhälfte 14 ist mit seitlichen Laufrädern 14a versehen, mit denen die Backzange 6 in den horizontalen Bahnabschnitten 10 und 11 der Umlaufbahn 9 auf Laufschienen 9b durch die Backvorrichtung 1 befördert wird. Die Backzange 6 wird durch Verschwenken ihrer oberen Zangenhälfte 15 geöffnet und geschlossen. Am vorderen Rand der obere Zangenhälfte 15 ist eine über diese quer zur Laufrichtung vorstehende, obere Rolle 16 angebracht, die mit im Gestell 8 stationär angeordneten Führungskulissen 9a zusammenwirkt, die an dem der Vorderseite der Backvorrichtung 1 benachbarten, vorderen Rand der Umlaufbahn 9 angeordnet sind. Bei geschlossener Backzange 6 liegen die beiden Backplatten 4 und 5 einander gegenüber und begrenzen den zwischen ihnen angeordneten, inneren Backhohlraum der Backform. Der von den beiden Backplatten 4, 5 nach oben bzw. nach unten begrenzte, innere Backhohlraum der Backform ist an seinen seitlichen Rändern offen.

Die Backzangen 6 durchlaufen die untere Hälfte der Umlaufbahn 9 im geschlossenen Zustand, wobei die oberen Rollen 16 an den entlang der Umlaufbahn 9 angeordneten Führungskulissen 9a anliegen und die Backzangen 6 geschlossen halten, die dabei lediglich durch das Gewicht der obenliegenden, unteren Zangenhälfte 14 geschlossen gehalten werden. Beim Durchlaufen der oberen Hälfte der Umlaufbahn 9 kommen die Backzangen 6 mit ihren oberen Rollen 16 mit in Fig. 1 nicht dargestellten Führungskulissen in Eingriff und werden durch diese zuerst geöffnet, dann offen gehalten und schließlich geschlossen. Diese Führungskulissen sind entlang dem vorderen Rand der Umlaufbahn 9 angeordnet. In Fig. 1 wurden diese Führungskulissen weggelassen, um die durch sie erzeugten Schwenkstellungen der oberen Zangenhälften 15 deutlicher sichtbar zu machen.

Die Backzangen 6 sind an ihren unteren Zangenhälften 14 miteinander beweglich verbunden. Sie bilden eine endlose Transportkette, die in den Endabschnitten 8a, 8b des Gestells 8 über Umlenkräder 18, 19 geführt ist, deren Drehachsen horizontal ausgerichtet sind. Die Transportkette wird von einem nicht dargestellten Antrieb angetrieben und läuft in Richtung des Pfeiles 20 um. Die Transportkette wird von einer nicht dargestellten Kettenspannvorrichtung gespannt gehalten.

Die Backzangen 6 werden beim Durchlaufen des halbkreisförmigen Bahnabschnittes 13 in dessen oberer Hälfte allmählich geöffnet. Im oberen, horizontalen Bahnabschnitt 10 werden sie dann weiter geöffnet und bis in eine Offenstellung aufgeklappt, in der die zum hinteren Rand der Backzange 6 nach oben verschwenkte, obere Zangenhälfte 15 oberhalb des Gelenks der Backzange 6 im wesentlichen senkrecht steht. Die aufgeklappten Backzangen 6 durchlaufen den ersten Teilabschnitt 10a des oberen, horizontalen Bahnabschnittes 10. In diesem Teilabschnitt 10a sind die Ausgabestation 21 der Backvorrichtung 1, eine Beschickungsstation 22 für die Backmasse und eine Beschickungsstation 23 für Streugut in Laufrichtung 20 der Backzangen 6 hintereinander angeordnet. In diesem Teilabschnitt 10a wird bei jeder Backzange 6 in der Ausgabestation 21 ein flaches Vorprodukt 2 von der unteren Backplatte 4 abgenommen, in der Beschickungsstation 22 eine Backmasseportion auf die leere untere Backplatte 4 aufgebracht und in der Beschickungsstation 23 ein Streugut auf die Backmasse aufgebracht. Beim Verlassen des Teilabschnittes 10a werden die Backzangen 6 geschlossen und dann im geschlossenen Zustand lediglich durch das Eigengewicht der oberen Zangenhälfte 15 geschlossen gehalten. Die Backzangen 6 durchlaufen im geschlossenen Zustand den zweiten Teil 10b des Bahnabschnittes 10 und die unteren Hälfte der Umlaufbahn 9, bevor sie in der oberen Hälfte des halbkreisförmigen Bahnabschnittes 13 wieder allmählich geöffnet werden.

Beim Schließen der Backzange 6 wird die obere Zangenhälfte 15 zur unteren Zangenhälfte 14 hin nach unten geschwenkt. Bei dieser Schwenkbewegung wird die obere Backplatte 5 in eine zur unteren Backplatte 4 parallele Lage gebracht. Das Streugut wird von der oberen Backplatte 5 in die auf der unteren Backplatte 4 liegende Backmasse eingedrückt und zusammen mit dieser zwischen oberer und unterer Backplatte ausgebreitet. Das mechanische Ausbreiten kann gegebenenfalls durch eine auf die oberen Rollen 16 der Backzangen 6 drückende an der Umlaufbahn der Backzangen angeordnete Niederhalterleiste gesteuert werden, die von obenauf die oberen Rollen 16 der geschlossenen Backzangen 6 drückt. Mit dem Schließen der Backzange 6 beginnt der Backprozess in dem von den beiden heißen Backplatten 4 und 5 begrenzten, inneren Backhohlraum der Backform. Durch den Backprozess wird das in der Backmasse enthaltene Wasser in Wasserdampf verwandelt, der sich in der Backmasse verteilt und die Backmässe samt Streugut im inneren Backhohlraum der Backform ausbreitet. Dabei entsteht ein flacher Backmassekörper, der an den einander gegenüberliegenden Backflächen beider Backplatten 4 und 5 anliegt und an seiner Oberseite das in ihm eingepresste Streugut trägt. Während die geschlossene Backzange 6 die untere Hälfte der Umlaufbahn 9 durchläuft, wird der zwischen den beiden Backplatten 4 und 5 angeordnete, flache Backmassekörper durch den fortlaufenden Backprozess in ein flaches Vorprodukt 2 verwandelt, das im backwarmen Zustand plastisch verformbar ist und an seiner Oberseite ein in den Körper das Vorproduktes 2 eingebackenes Streugut trägt. Dieses flache Vorprodukt 2 wird an der Ausgabestation 21 der Backvorrichtung 1 von der unteren Backplatte 4 der aufgeklappten Backzangen 6 abgenommen.

Die für den Backprozess erforderliche Wärme wird durch entlang der Umlaufbahn 9 der Backzangen angeordnete, in der Zeichnung nicht-dargestellte Heizvorrichtungen von außen in die Backzangen 6 eingebracht. Alternativ dazu kann die für den Backprozess erforderliche Wärme auch durch in die beiden Zangenhälften 14 und 15 der Backzangen 6 eingebaute, elektrische Heizelemente erzeugt werden, die von einer entlang der Umlaufbahn 9 der Backzangen 6 angeordneten Stromzufuhr mit elektrischer Energie versorgt werden.

An der Ausgabestation 21 ist eine Abnahmevorrichtung 24 vorgesehen, die an der Vorderseite der Backvorrichtung 1 neben der Umlaufbahn 9 der Backzangen 6 angeordnet ist und in die geöffneten Backzangen 6 hineinreicht. Die Abnahmevorrichtung 24 nimmt die flachen Vorprodukte 2 von den unteren Backplatten 4 der geöffneten Backzangen 6 ab. Dies geschieht durch ein stationäres Abnahmeblech 25, das über der Bahn der unteren Zangenhälften 14 angeordnet ist und eine in Querrichtung verlaufende Messerkante 26 besitzt, die kapp über den unter ihr vorbeilaufenden Backflächen der unteren Backplatten 4 der geöffneten Backzangen 6 angeordnet ist. Die auf den unteren Backplatten 4 liegenden flachen Vorprodukte 2 werden durch die Umlaufbewegung der Backzangen 6 über die Messerkante 26 hinweg auf das Abnahmeblech 25 geschoben. Dort werden die flachen Vorprodukte 2 von einer der Abnahmevorrichtung 24 zugeordneten Übergäbevorrichtung 27 erfasst, die einen um eine vertikale Achse rotierenden Drehsterns 28 besitzt, der mit seinen radial abstehenden Armen 29 die auf das Abnähmeblech 25 geschobenen, flachen Vorprodukte erfasst und entlang einem Kreisbogen vom Abnahmeblech 25 über ein kreisbogenförmiges Leitblech 29 zu der Umformmaschine 3 der Anlage befördert, welche an der Vorderseite der Backvorrichtung 1 neben deren Ausgabestation 21 angeordnet ist.

Die in der Zeichnung nur schematisch dargestellte Umformmaschine 3 kann eine der bekannten Umformmaschinen sein, in denen einzelne, gebackene, plastisch verformbare Blätter zu tütenförmigen, oder becherförmigen Formkörpem eingerollt bzw. mechanisch umgeformt werden, die beim Abkühlen auf Raumtemperatur eine knusprige, spröde Konsistenz annehmen und dann z. B. als Behälter für Speiseeis verwendet werden können.

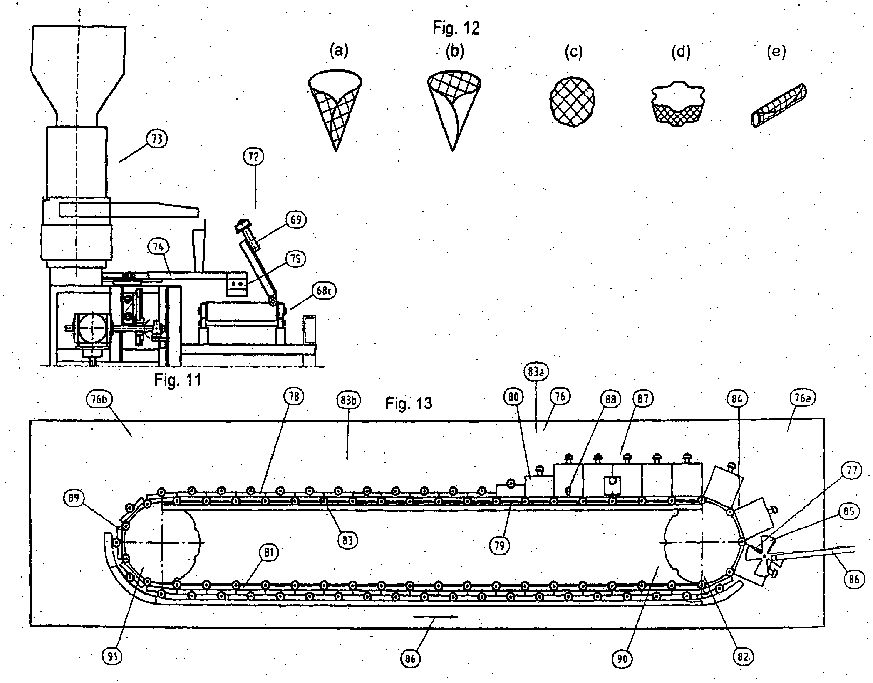

In einer solchen Umformmaschine werden die in der Backvorrichtung 1 hergestellten flachen Vorprodukte 2 in den Umformwerkzeugen der Umformmaschine zu Tüten oder Bechern eingerollt bzw. mechanisch umgeformt. Dabei gelangt jeweils das an der Oberseite eines flachen Vorproduktes 2 angeordnete Streugut an die bei der fertigen Tüte bzw. dem fertigen Becher vorgesehene Stellen der Außenseite oder der Innenseite der Tüte bzw. des Bechers. Fig. 12a zeigt eine gerollte Tüte mit an ihrer Außenseite angeordnetem Streugut, das durch eine Kreuzschraffur angedeutet ist. Fig. 12b zeigt eine gerollte Tüte mit an ihrer Innenseite angeordnetem Streugut, das durch eine Kreuzschraffur angedeutet ist. Fig. 12d zeigt ein zu einem Becher mechanisch umgeformtes, flaches Vorprodukt mit an der Außenseite des Bechers angeordnetem Streugut, das durch eine Kreuzschraffur angedeutet ist.

Die Umformmaschine 3 kann mit Umformwerkzeugen ausgerüstet sein, in denen die flachen, plastisch verformbaren Vorprodukte 2 um zylindrische Formkerne herum zu Hülsen eingerollt werden, wobei jeweils das an der Außenseite des flachen Vorproduktes in dieses eingebackene Streugut an der Außenseite der Hülsen zu liegen kommt. Fig. 12e zeigt eine solche zylindrische Hülse mit an der Außenseite angeordnetem Streugut, das durch eine Kreuzschraffur angedeutet ist.

Die Umformmaschine 3 kann auch mit einem Umformwerkzeug ausgerüstet sein, in dem ein flaches, plastisch verformbares Vorprodukt 2 durch einen Tiefziehvörgang in einen seichten Teller oder eine seichte Tasse verwandelt wird, wobei das an der Oberseite in das flache Vorprodukt eingebackene Streugut am Tellerrand oder in der Seitenwand der Tasse zu liegen kommt.

Die in der jeweiligen Umformmaschine durch mechanisches Umformen der Streugut tragenden, backwarmen, flachen Vorprodukte entstandenen Formkörper - z. B. an der Außenseite oder an der Innenseite Streugut tragende Tüten, Hülsen oder Becher; oder durch einen Tiefziehvorgang entstandene, an der Oberseite oder an der Unterseite Streugut tragende, flache Teller oder seichte Tassen mit kreisrunder Gestalt oder mit einer eckigen, mit abgerundeten Ecken versehenen Gestalt, etc. - nehmen beim Abkühlen auf Raumtemperatur eine knusprige, spröde Konsistenz an, weil beim Abkühlen auf Raumtemperatur das in ihnen enthaltene Plastifizierungsmittel sein plastifizierende Wirkung verliert und der jeweilige Formkörper erstarrt.

Im Teilabschnitt 10a der Umlaufbahn 9 der Backzangen 6 ist eine Beschickungsstation 23 für Streugut vorgesehen. Diese umfasst eine Streuvorrichtung 30, die an der Vorderseite der Backvorrichtung 1 neben der Umlaufbahn 9 der Backzangen 6 angeordnet ist. Die Streuvorrichtung 30 besitzt einen langgestreckten Ausleger 31, der die unteren Backplatten 4 der geöffneten Backzangen 6 in Querrichtung übergreift und an seinem freien Ende einen Streukopf 32 trägt, der mit einer Leiteinrichtung für das aus ihm austretende Streugut versehen ist. Als Leiteinrichtung sind zwei horizontal ausgerichtete, das Streugut verteilende Leitelemente 33, 34 und eine unterhalb von diesen angeordnete, vertikal ausgerichtete und den Streubereich begrenzende Leithülse 35 vorgesehen. Die Leitelemente 33, 34 werden von zwei zur Laufrichtung 20 der Backzangen 6 parallelen Stäben gebildet, die in Querrichtung mit Abstand nebeneinander angeordnet sind. Die vertikale Leithülse 35 besitzt einen an den Umriss des Streubereiches angepassten Querschnitt. Dieser kann kreisförmig, kreissektorförmig, quadratisch, rechteckig oder unrund sein. Als Leiteinrichtung kann auch ein horizontal angeordnetes Streugitter vorgesehen sein, bei dem das Gitter die Leitelemente für das Streugut bildet und der Umriss des Streubereiches durch den Verlauf der äußeren Umrandung des Streugitters festgelegt wird.

Die Streuvorrichtung 30 besitzt ein an der Vorderseite der Backvorrichtung 1 angeordnetes Gestell 36. Dieses trägt ein Gehäuse 37, auf dem ein Vorratsbehälter 38 für das Streugut sitzt. In dem Gehäuse 37 ist ein Vibrationsförderer 39 untergebracht, der das Streugut vom Vorratsbehälter 38 zu einer Waage 40 befördert. In der Waage 40 wird das Streugut gewichtsmäßig dosiert. Unterhalb der Waage 40 ist ein Rundfördertopf 41 angeordnet, in den das Streugut taktweise eingebracht wird. Aus dem Rundfördertopf 41 tritt das Streugut in einem gleichmäßigen Förderstrom aus, der an einen Vibrationsförderer 42 übergeben wird, der neben dem Rundfördertopf 41 angeordnet ist. Der Vibrationsförderer 42 besitzt eine oberhalb vom Ausleger 31 angeordnete und sich parallel zu diesem erstreckende Förderrinne. Diese gibt das Streugut an ihrem freien Ende 43 taktweise an ein unterhalb von diesem angeordnetes vertikales Fallrohr 44 ab.

Das Fallrohr 44 steht vom Ausleger 31 nach oben ab und mündet an seinem unteren Ende in ein horizontales Förderrohr 45 des Auslegers 31. Das Förderrohr 45 besitzt einen rechteckigen Querschnitt und erstreckt sich entlang dem Ausleger 31 nach vorne bis zum Streukopf 32. Das Förderrohr 45 ist mit seinem hinteren Ende am Gestell 36 befestigt. Im hinteren Teil des Förderrohres 45 ist ein horizontal verschiebbarer Rechteckkolben 46 angeordnet. Dieser wird im Förderrohr 45 durch einen Antrieb 47 hin und her bewegt wird, der mit der umlaufenden Backzangenkette 7 gekoppelt ist.

Das Streugut gelangt taktweise über das vertikale Fallrohr 44 in das horizontale Förderrohr 45 und landet dort vor dem Rechteckkolben 46. Dieser befördert die jeweilige Streugutportion durch das Förderrohr 45 zum Streukopf 32, wo die Streugutportion ausgegeben, und durch die mit horizontalen Leitelementen 33, 34 und vertikaler Leithülse 35 versehene Streugutleiteinrichtung in einem begrenzten Streubereich verteilt wird.

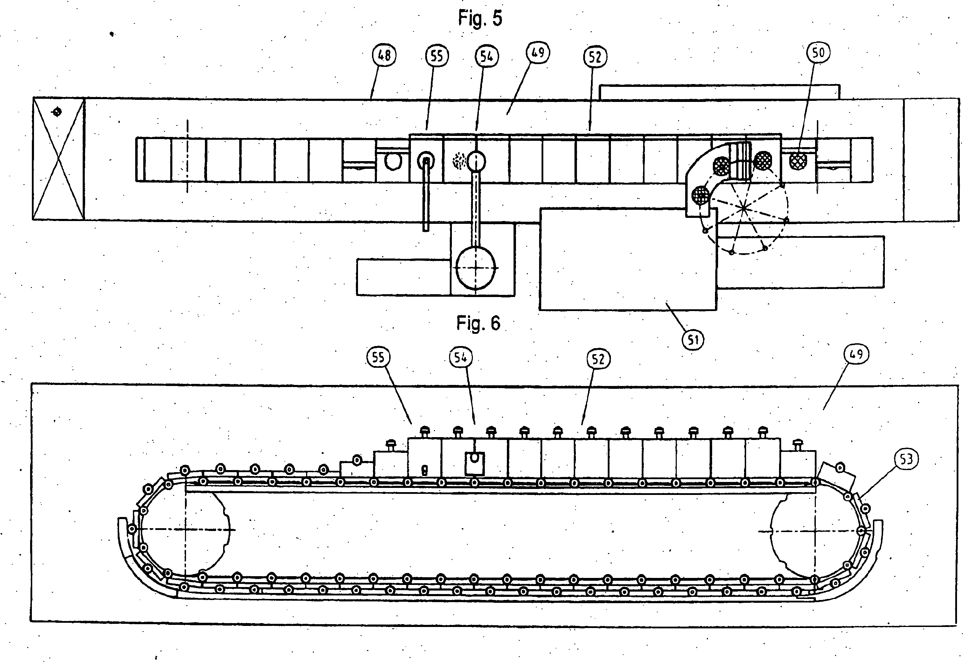

Die Fig. 5 und 6 zeigen eine weitere Anlage 48 zum Herstellen von dünnwandigen Formkörpern, die aus flachen, plastisch verformbaren Vorprodukten geformt werden und an zumindest einer Stelle ein Streugut tragen.

Diese Anlage 48 sieht eine langgestreckte Backvorrichtung 49 vor, in der flache, plastisch verformbare Vorprodukte 50 hergestellt werden, die an der Unterseite an zumindest einer Stelle ein Streugut tragen. Die flachen Vorprodukte 50 werden im backwarmen, plastisch verformbaren Zustand an eine Umformmaschine 51 übergeben, in der die flachen Vorprodukte 50 aus ihrer flachen Gestalt in die davon abweichende Gestalt der Formkörper mechanisch umgeformt werden. Bei diesem mechanischen Umformvorgang kommt das an der Unterseite eines flachen Vorproduktes 50 angeordnete Streugut an die beim fertigen Formkörper für des Streugut vorgesehene Stelle.

Die Backvorrichtung 49 entspricht in ihrem Aufbau und in ihrer Funktionsweise im wesentlichen der Backvorrichtung 1 des Ausführungsbeispieles der Fig. 1-4. Von dieser Backvorrichtung 1 unterscheidet sich die Backvorrichtung 49 dadurch, dass im oberen, horizontalen Bahnabschnitt 52 der Umlaufbahn der Backzangen 53 die Beschickungsstation 54 für das Streugut vor der Beschickungsstation 55 für die Backmasse angeordnet ist.

Die Umformmaschine 51 kann einem der beim Ausführungsbeispiel der Fig. 1-4 erörterten Ausführungsformen von Umformmaschinen entsprechen. Diese Umformmaschinen verarbeiten dann an der Unterseite mit einem eingebackenen Streugut versehene, flache Vorprodukte 50 zu dünnwandigen Streugut tragenden Formkörpern, wie z. B. zu Tüten, Röhrchen, Tellern oder Tassen.

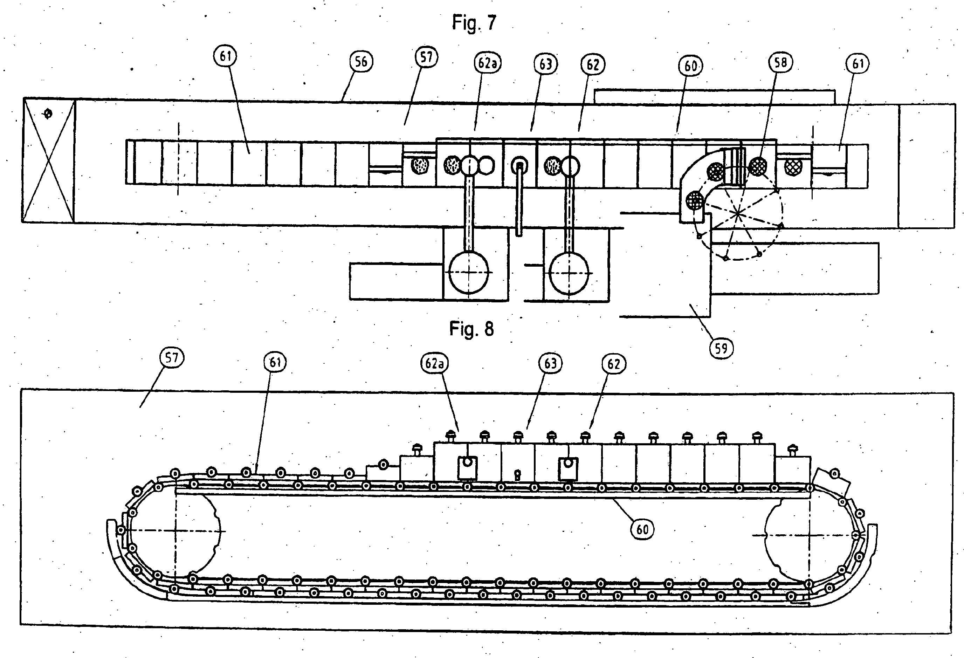

Die Fig. 7 und 8 zeigen eine Anlage 56 zum Herstellen von dünnwandigen Formkörpern, die aus flachen, plastisch verformbaren Vorprodukten geformt werden und an beiden Seiten an zumindest einer Stelle ein Streugut tragen.

Die Anlage 56 sieht eine langgestreckte Backvorrichtung 57 vor, in der flache, plastisch verformbare Vorprodukte 58 hergestellt werden, die an ihrer Unterseite und an ihrer Oberseite an zumindest einer Stelle ein Streugut tragen. Die flachen Vorprodukte 58 werden im backwarmen, plastisch verformbaren Zustand an eine Umformmaschine 59 übergeben, in der die flachen Vorprodukte 58 aus ihrer flachen Gestalt in die davon abweichende Gestalt der Formkörper mechanisch umgeformt werden. Bei diesem mechanischen Umformvorgang kommt jeweils das in die Unterseite des flachen Vorproduktes 58 eingebackene Streugut und das in die Oberseite des flachen Vorproduktes 58 eingebackene Streugut an die beim fertigen Formkörper für das jeweilige Streugut vorgesehene Stelle.

Die Backvorrichtung 57 entspricht in ihrem Aufbau und in ihrer Funktionsweise im wesentlichen der Backvorrichtung 1 des Ausführungsbeispieles der Fig. 1-4. Von dieser Backvorrichtung 1 unterscheidet sich die Backvorrichtung 57 dadurch, dass im oberen, horizontalen Bahnabschnitt 60 der Umlaufbahn der Backzangen 61 eine erste Beschickungsstation 62 für Streugut vor der Beschickungsstation 63 für die Backmasse angeordnet ist und eine zweite Beschickungsstation 62a für Streugut nach der Beschickungsstation 63,für die Backmasse angeordnet ist.

Die Umformmaschine 59 kann einem der beim Ausführungsbeispiel der Fig. 1-4 erörterten Ausführungsformen von Umformmaschinen entsprechen. Diese Umformmaschinen verarbeiten dann an der Unterseite und an der Oberseite mit einem eingebackenen Streugut versehene, flache Vorprodukte 58 zu dünnwandigen Streugut tragenden Formkörpern, wie z. B. zu Tüten, Röhrchen, Tellern oder Tassen.

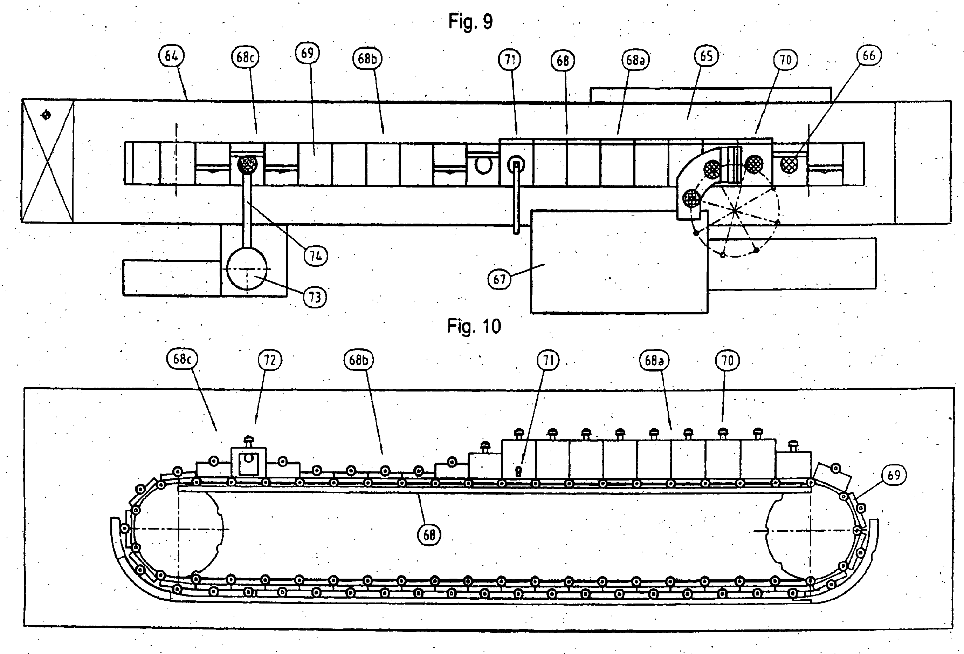

Die Fig. 9 - 11 zeigen eine weitere Anlage 64, die nicht Teil der Erfindung ist, zum Herstellen von dünnwandigen Formkörpern, die aus flachen, plastisch verformbaren Vorprodukten geformt werden und an zumindest einer Stelle ein Streugut tragen.

Die Anlage 64 sieht eine langgestreckte Backvorrichtung 65 vor, in der flache, plastisch verformbare Vorprodukte 66 hergestellt werden, die an ihrer Oberseite an zumindest einer Stelle ein Streugut tragen. Die flachen Vorprodukte 66 werden im backwarmen, plastisch verformbaren Zustand einer Umformmaschine 67 zugeführt, in der die flaschen Vorprodukte 66 aus ihrer flachen Gestalt in die davon abweichende Gestalt der Formkörper mechanisch umgeformt werden. Bei diesem mechanischen Umformvorgang kommt das an der Oberseite eines flachen Vorproduktes 66 angeordnete Streugut an die beim fertigen Formkörper für des Streugut vorgesehene Stelle.

Die Backvorrichtung 65 entspricht in ihrem Aufbau und in ihrer Funktionsweise im wesentlichen der Backvorrichtung 1 des Ausführungsbeispieles der Fig. 1-4. Von dieser Backvorrichtung 1 unterscheidet sich die Backvorrichtung 65 dadurch, dass beim oberen, horizontalen Bahnabschnitt 68 der Umlaufbahn der Backzangen 69 im ersten Teilabschnitt 68a nach der Ausgabestation 70 nur eine Beschickungsstation 71 für die Backmasse vorgesehen ist und der zweite Teilabschnitt in zwei Unterabschnitte 68b und 68c unterteilt ist, von denen der zweite Unterabschnitt 68c mit einer Beschickungsstation 72 für Streugut versehen ist.

Bei der Backvorrichtung 65 durchlaufen die Backzangen 69 den Teilabschnitt 68a im geöffneten Zustand: Dabei werden in der Ausgabestation 70 die flachen, an der Oberseite Streugut tragenden Vorprodukte 66 von den unteren Backplatten der Backzangen 69 abgenommen und die leeren unteren Backplatten in der Beschickungsstation 71 mit Backmasse beschickt. Beim Verlassen des Teilabschnittes 68a werden die Backzangen 69 geschlossen und durchlaufen dann den ersten Unterabschnitt 68b im geschlossenen Zustand, während in ihnen aus der sich ausbreitenden Backmasse ein an beiden Backplatten anliegender, flacher Backmassekörper entsteht, der am Ende des ersten Unterabschnittes 68b erst teilweise gebacken, aber bereits ausreichend formstabil ist, sodass er beim Öffnen der Backzange 69 seine flache Gestalt beibehält. Die Backzangen werden im zweiten Unterabschnitt 68c geöffnet und bis in eine Schrägstellung der oberen Backplatte aufgeklappt. Im zweiten Unterabschnitt 68c ist eine Beschickungsstation 72 für Streugut vorgesehen. Diese sieht eine an der Vorderseite der Backvorrichtung 65 angeordnete Streuvorrichtung 73 vor, die im wesentlichen der Streuvorrichtung 30 des Ausführungsbeispieles der Fig. 1-4 entspricht. Die Streuvorrichtung 73 besitzt einen sich quer zur Laüfrichtung der Backzangen 69 erstreckenden Ausleger 74, der bis in die geöffneten Backzangen 69 reicht und an seinem freien Ende einen Streukopf 75 trägt. In der geöffneten Backzange 69 fällt das Streugut vom Streukopf 75 auf die Oberseite eines flachen Backmassekörpers und wird beim Schließen der Backzange 69 in den flachen Backmassekörper eingedrückt. Nach dem Passieren der Beschickungsstation 72 werden die Backzangen 69 wieder geschlossen und durchlaufen dann die übrigen Bahnabschnitte ihrer Umlaufbahn im geschlossenen Zustand. In den geschlossenen Bäckzangen 69 werden die flachen Backmassekörper mit dem in ihre Oberseite eingedrückten Streugut durch den ablaufenden Backprozess in flache, Streugut tragende Vorprodukte 66 verwandelt, die im backwarmen Zustand plastisch verformbar sind. Diese Vorprodukte 66 werden an die Umformmaschine 67 übergeben. Diese kann einem der beim Ausführungsbeispiel der Fig. 1-4 erörterten Ausführungsformen von Umformmaschinen entsprechen. Diese Umformmaschinen verarbeiten dann an der Oberseite mit einem eingebackenen Streugut versehenen, flachen Vorprodukte 66 zu dünnwandigen Streugut tragenden Formkörpern, wie z. B. zu Tüten, Röhrchen, Tellern oder Tassen.

Die Fig. 13 zeigt eine langgestreckte Backvorrichtung 76 zum Herstellen von dünnwandigen, Streugut tragenden Formkörpem 77.

Die Streugut tragenden Formkörper 77 werden in auf ihre Gestalt abgestellten, auf- und zumachbaren Backformen hergestellt, bei denen jeweils der bei geschlossener Backform zwischen Backformunterteil und Backformoberteil angeordnete, innere Backhohlraum der Backform in seiner Gestalt der Gestalt des herzustellenden Formkörpers entspricht.

Zum Herstellen der Formkörper wird zuerst Streugut und dann eine gießfähige Backmasse auf den Backformunterteil der geöffneten Backform aufgebracht und dann die Backform geschlossen. Das Streugut wird zusammen mit der Backmasse in der geschlossenen Backform gebacken. Beim Schließen der Backform wird die über dem Streugut angeordnete Backmasse mechanisch im Backformunterteil verteilt. Mit dem Schließen der Backform beginnt in der Backform der Backprozess. Durch diesen wird das in der Backmasse enthaltene Wasser in Wasserdampf verwandelt. Die Bäckmasse kocht auf. Der Wasserdampf verteilt sich in der Backmasse, schäumt diese auf und verteilt diese über den inneren Backhohlraum der Backform, bevor er aus oder aufgeschäumten Backmasse entweicht. Das Streugut verbleibt an der Unterseite des sich ausbreitenden Backmassekörpers, der am Ende seiner Ausbreitung den inneren Backhohlraum der Backform vollständig ausfüllt. In der anschließenden Backphase wird der den inneren Backhohlraum der Backform ausfüllende Backmassekörper fertig gebacken und das an seiner Unterseite angeordnete Streugut wird in ihn eingebacken. Am Ende des Backprözesses wird die Backform geöffnet und der fertige, an seiner Unterseite das eingebackene Streugut tragende Formkörper 77 wird aus der geöffneten Backform ausgegeben.

Die Backformen sind in den Backzangen 78 einer in der Backvorrichtung 76 entlang einer in sich geschlossenen Umlaufbahn in Längsrichtung umlaufenden, endlosen Backzangenkette aufgenommen. Die Backformen sind mit ihren Backformunterteilen in den unteren Zangenhälften 79 und mit ihren Backformoberteilen in den oberen Zangenhälften 80 der Backzangen 78 aufgenommen. Die Backzangen 78 werden zum Öffnen der Backformen aufgeklappt und zum Schließen der Backformen zugeklappt. Die Backzangen 78 sind mit seitlichen Verriegelungsvorrichtungen versehen, die jeweils gleich nach dem Schließen der Backzange 78 verriegelt werden, um die untere Zangenhälfte 79 mit der ihr gegenüberliegenden oberen Zangenhälfte 80 starr zu verbinden und die Backzange 78 entgegen dem anfangs sehr hohen Dampfdruck geschlossen zu halten, der im Inneren der geschlossenen Backform durch den in der Backmasse entstehenden Wasserdampf erzeugt wird.

Die Backzangenkette befördert die geschlossenen und verriegelten Backzangen 78 im unteren, horizontalen Bahnabschnitt 81 der Umlaufbahn zum vorderen Ende 76a der Backvorrichtung 76. Dort passieren die Backzangen 78 einen halbkreisförmigen Bahnabschnitt 82, der den unteren, horizontalen Bahnabschnitt 81 mit dem oberen, horizontalen Bahnabschnitt 83 der Umlaufbahn verbindet. An diesem halbkreisförmigen Bahnabschnitt 82 ist die Ausgabestation 84 der Backvorrichtung 76 angeordnet. Beim Passieren dieses halbkreisförmigen Bahnabschnittes 82 werden die Verriegelungsvorrichtungen der Backzangen 78 entriegelt und die Backzangen 78 allmählich aufgeklappt. Die fertigen, an der Unterseite ein eingebackenes Streugut tragenden Formkörper 77 gleiten nach unten aus den schräg stehenden, geöffneten Backformen und gleiten auf einen um eine horizontale Achse drehbaren, vierarmigen Drehstern 85, der die flachen Formkörper 77 an ein horizontales Förderband 86 übergibt, das die flachen, an der Unterseite ein Streugut tragenden Formkörper 77 aus der Backvorrichtung 76 hinausbefördert.

Nach dem Verlassen des halbkreisförmigen Bahnabschnittes 82 werden die aufgeklappten Backzangen 78 durch einen ersten Teilabschnitt 83a des oberen, horizontalen Bahnabschnittes 83 der Umlaufbahn transportiert. In diesem Teilabschnitt 83a passieren die Backzangen 78 zuerst eine Beschickungsstation 87 für Streugut, in der Streugut auf die leeren, nach oben weisenden Backflächen der Backformunterteile aufgestreut wird. Die Beschickungsstation 87 ist mit einer Streuvorrichtung versehen, die das Streugut taktweise auf die nach oben weisenden Backflächen der Backformunterteile aufstreut. Die in Fig. 13 nicht näher dargestellte Streuvorrichtung entspricht im wesentlichen der Streuvorrichtung 30 der Backvorrichtung 1 der Anlage des Ausführungsbeispieles der Fig. 1-4. Nach der Beschickungsstation 87 für das Streugut passieren die Backzangen 78 eine Beschickungsstation 88 für die Backmasse, in der eine gießfähige Backmasse auf die das Streugut tragenden Backflächen der Backformunterteile aufgebracht und das Streugut mit Backmasse überdeckt wird. Am Ende des Teilabschnittes 83a werden die Backzangen 78 geschlossen und deren Verriegelungsvorrichtungen verriegelt. Die geschlossenen und verriegelten Backzangen 78 werden von der Backzangenkette durch den zweiten Teilabschnitt 83b des oberen, horizontalen Bahnabschnittes 83 der Umlaufbahn zum hinteren Ende 76b der Backvorrichtung 76 transportiert. Dort passieren sie einen halbkreisförmigen Bahnabschnitt 89, der den oberen, horizontalen Bahnabschnitt 83 der Umlaufbahn mit dem unteren, horizontalen Bahnabschnitt 81 verbindet, in dem sie nach vorne zum vorderen Ende 76a der Backvorrichtung 76 befördert werden.

Die Backzangenkette ist im Bereich des vorderen, halbkreisförmigen Bahnabschnittes 82 und im Bereich des hinteren, halbkreisförmigen Bahnabschnittes 89 über Umlenkräder 90 und 91 geführt, deren Drehachsen horizontal ausgerichtet sind. Die endlose Backzangenkette wird von einem nicht dargestellten Antrieb in Bewegung gesetzt und durch eine nicht dargestellte Spannvorrichtung in Längsrichtung gespannt.

Die für den Backprozess erforderliche Wärme wird durch entlang der Umlaufbahn der Backzangen 78 angeordnete, in der Zeichnung nicht dargestellte Heizvorrichtungen von außen in die Backzangen 78 eingebracht. Alternativ dazu kann die für den Backprozess erforderliche Wärme auch durch in die beiden Zangenhälften 79 und 80 der Backzangen 78 eingebaute, elektrische Heizelemente erzeugt werden, die von einer entlang der Umlaufbahn der Backzangen 78 angeordneten Stromzufuhr mit elektrischer Energie versorgt werden.

Die Backvorrichtung 76 ist auf die Herstellung von dünnwandigen Formkörpern abgestellt, die an ihrer Unterseite ein Streugut tragen. Für die Herstellung von dünnwandigen Formkörpern, die an ihrer Oberseite ein Streugut tragen, kann eine im wesentlichen der Backvorrichtung 76 entsprechende Backvorrichtung eingesetzt werden, bei der im Teilabschnitt 83a die Beschickungsstation 88 für die Bäckmasse vor der Beschickungsstation 87 für das Streugut angeordnet ist. Für die Herstellung von dünnwandigen Formkörpern, die an ihrer Oberseite und an ihrer Unterseite ein Streugut tragen, kann eine im wesentlichen der Backvorrichtung 76 entsprechende Backvorrichtung eingesetzt werden, bei der im Teilabschnitt 83a sowohl vor der Beschickungsstation 88 für die Backmasse als auch nach dieser jeweils eine Beschickungsstation 87 für Streugut angeordnet ist.

Bei der in Fig. 13 dargestellten Backvorrichtung 76 sind die Backzangen 78 mit auf- und zumachbaren Backformen ausgerüstet, bei denen der innere Backhohlraum die Gestalt eines ebenen, dünnen Blattes besitzt. Die Backzangen 78 können auch mit auf- und zumachbaren Backformen ausgerüstet sein, bei denen der innere Backhohlraum die Gestalt einer flachen, mit abgerundeten Ecken versehenen, rechteckigen Schale oder eines runden Tellers besitzt.

In langgestreckten Backvorrichtungen umlaufende Backzangen, die auf- und zumachbare Backformen zum Herstellen von dünnwandigen Formkörpern enthalten und mit seitlichen Verriegelungsvorrichtungen oder mit seitlichen Klemmverschlüssen versehen sind, sind z. B. aus der AT 115 787 B und US 5,103,717 A1, oder WO 96/014750 A1 und US 5,955,129 A bekannt. Eine im wesentlichen dem Ausführungsbeispiel der Fig. 13 entsprechende, langgestreckte Backvorrichtung 76 zum Herstellen von dünnwandigen, Streugut tragenden Formkörpern 77 kann auch mit den in der AT 115 787 B bzw. der US 5,103,717 A1, oder in der WO 96/014750 A1 bzw. in der US 5,955,129 A beschriebenen Backzangen ausgerüstet sein.

Eine Backvorrichtung zum Herstellen von dünnwandigen, Streugut tragenden Formkörper, die mit den in der WO 96/014750 A1 bzw. in der US 5,955,129 A beschriebenen Backzangen ausgerüstet ist, unterscheidet sich von den in der WO 96/014750 A1 bzw. in der US 5,955,129 A beschriebenen Backvorrichtungen zur Herstellung von gegossenen Tüten oder Bechern oder ebenen Flachwäffeln hauptsächlich dadurch, dass der Aufgießstation für die gießfähige Backmasse eine Streugutbeschickungsstation vorgelagert und/oder nachgeordnet ist.

## Patentansprüche

1. Verfahren zum Herstellen von dünnwandigen Formkörpern, bei welchem aus einer Backmasse ein der Gestalt der Formkörper entsprechendes Backprodukt in einer auf die Gestalt der Formkörper abgestellten, auf- und zumachbaren Backform hergestellt wird, bei der Backformunterteil und Backformoberteil bei geschlossener Backform einander gegenüberliegen und zwischen sich einen der Gestalt der Formkörper entsprechenden, inneren Backhohlraum begrenzen, wobei das Verfahren folgende Schritte umfasst:
(1) Öffnen der Backform,
(2) Einbringen einer Backmasse in die Backform,
(3) Schließen der Backform,
(4) Backen der Backmasse in der geschlossenen Backform, wobei aus der sich im inneren Backhohlraum der Backform ausbreitenden Backmasse ein den inneren Backhohlraum ausfüllender, gebackener Formkörper entsteht,
(5) Öffnen der Backform und
(6) Entnehmen des gebackenen, dünnwandigen Formkörpers aus der geöffneten Backform
***dadurch gekennzeichnet,* dass** Streugut in die geöffnete Backform eingebracht und zusammen mit der Backmasse bei geschlossener Backform zu einem den inneren Backhohlraum ausfüllenden Formkörper gebacken wird, bei dem das Streugut an zumindest einer Stelle der Oberfläche in den dünnwandigen Formkörper eingebacken ist.

2. Verfahren nach Anspruch 1, ***dadurch gekennzeichnet,* dass** Streugut vor der Backmasse auf den Backformunterteil aufgebracht und mit Backmasse überdeckt wird.

3. Verfahren nach Anspruch 1, ***dadurch gekennzeichnet,* dass** die Backmasse vor dem Streugut auf den Backformunterteil aufgebracht und an zumindest einer Stelle mit Streugut bedeckt wird.

4. Verfahren nach Anspruch 1, ***dadurch gekennzeichnet,* dass** zuerst die Backmasse bei geschlossener Backform zu einem teilweise gebackenen, formstabilen Backmassekörper gebacken wird und dass Streugut während eines vorübergehenden Öffnens der Backform an zumindest einer Stelle auf den teilweise gebackenen Backmassekörper aufgebracht und der Streugut tragende Backmassekörper bei geschlossener Backform fertig gebacken wird.

5. Verfahren zum Herstellen von dünnwandigen Formkörpern, bei welchem aus einer Backmasse, die ein in der Hitze wirksam werdendes Plastifizierungsmittel enthält, auf einer beheizten Backfläche ein flaches, im backwarmen Zustand plastisch verformbares Vorprodukt gebacken wird, das von der Backfläche abgenommen, im backwarmen Zustand mechanisch umgeformt und zu einzelnen Formkörpern verarbeitet wird, die beim Abkühlen auf Raumtemperatur eine formstabile Konsistenz annehmen, ***dadurch gekennzeichnet,* dass** Streugut zusammen mit der Backmasse auf der beheizten Backfläche zu einem flachen, im backwarmen Zustand plastisch verformbaren Vorprodukt gebacken wird und dass das Streugut tragende, flache Vorprodukt von der Backfläche abgenommen, mechanisch umgeformt und zu Formkörpern verarbeitet wird.

6. Verfahren nach Anspruch 5, ***dadurch gekennzeichnet,* dass** Streugut vor der Backmasse auf die beheizte Backfläche aufgebracht und mit Backmasse überdeckt wird.

7. Verfahren nach Anspruch 5, ***dadurch gekennzeichnet,* dass** die Backmasse vor dem Streugut auf die beheizte Backfläche aufgebracht und anschließend an zumindest einer Stelle mit Streugut bedeckt wird.

8. Verfahren nach einem der Ansprüche 5 - 7, ***dadurch gekennzeichnet,* dass** die Backmasse streifenförmig aufgebracht wird und zusammen mit dem Streugut zu einem flachen Vorproduktband gebacken wird, das im backwarmen Zustand plastisch verformbar ist und an seiner Oberseite und/oder Unterseite zumindest stellenweise Streugut trägt, und dass das plastisch verformbare, Streugut tragende Vorproduktband von der Backfläche abgenommen, mechanisch umgeformt und zu einzelnen Formkörpern verarbeitet wird, die beim Abkühlen auf Raumtemperatur eine formstabile Konsistenz annehmen.

9. Verfahren zum Herstellen von dünnwandigen Formkörpern, bei welchem aus einer Backmasse, die ein in der Hitze wirksam werdendes Plastifizierungsmittel enthält, ein flaches, plastisch verformbares Vorprodukt in einer auf- und zumachbaren Backform hergestellt wird, bei der obere und untere Backplatten bei geschlossener Backform einander gegenüberliegen und zwischen sich einen flachen Backhohlraum begrenzen, der zumindest stellenweise seitlich offen ist, wobei das Verfahren folgende Schritte umfasst:
(1) Öffnen der Backform,
(2) Einbringen der Backmasse in die Backform,
(3) Schließen der Backform,
(4) Backen der Backmasse in der geschlossenen Backform, wobei aus der sich zwischen den beiden Backplatten ausbreitenden Backmasse ein gebackenes, flaches Vorprodukt entsteht, das an beiden Backplatten anliegt und im backwarmen Zustand plastisch verformbar ist,
(5) Öffnen der Backform,
(6) Entnehmen des flachen, plastisch verformbaren Vorproduktes aus der Backform ,
(7) Mechanisches Umformen des flachen, plastisch verformbaren Vorproduktes in die Gestalt des Formkörpers, und
(8) Erstarrenlassen des plastisch verformbaren Formkörpers,
***dadurch gekennzeichnet,* dass** nach dem Öffnen der Backform oder nach dem Einbringen der Backmasse Streugut in die Backform eingebracht wird und dass das Streugut zusammen mit der Backmasse in einem ununterbrochenen Backprozess bei geschlossener Backform zu einem Streugut tragenden, im backwarmen Zustand plastisch verformbaren, flachen Vorprodukt gebacken wird, das nach dem Entnehmen aus der Backform zu einem Streugut tragenden Formkörper mechanisch umgeformt und als Streugut tragender Formkörper erstarren gelassen wird.

10. Verfahren nach Anspruch 9, ***dadurch gekennzeichnet,* dass** zuerst Streugut auf die untere Backplatte der geöffneten Backform aufgebracht und dann das Streugut mit Backmasse überdeckt wird.

11. Verfahren nach Anspruch 9, ***dadurch gekennzeichnet,* dass** zuerst Backmasse auf die untere Backplatte der geöffneten Backform aufgebracht und dann die Backmasse an zumindest einer Stelle mit Streugut bedeckt wird.

12. Backvorrichtung (1) zum Herstellen von dünnwandigen Formkörpem, bei welcher in aufund zumachbaren Backzangen (6) aufgenommene, auf- und zumachbare Backformen in einem Gestell (8) einen geschlossenen Kreislauf durchlaufen, wobei in der Backvorrichtung entlang der Umlaufbahn (9) der Backzangen (6) eine Beschickungsstation (22) zum Einbringen von Backmasse in die geöffneten Backformen, ein Backraum zum Backen der Formkörper und eine Ausgabestation (21) zum Ausgeben der gebackenen Formkörper aus den geöffneten Backformen angeordnet sind, ***dadurch gekennzeichnet,* dass** an der Umlaufbahn (9) der Backzangen (6) ein von geöffneten Backzangen (6) durchlaufener Bahnabschnitt (10a) vorgesehen ist, in dem die Beschickungsstation (22) für die Backmasse und zumindest eine Beschickungsstation (23) zum Einbringen von Streugut in die geöffneten Backformen angeordnet sind.

13. Backvorrichtung nach Anspruch 12, ***dadurch gekennzeichnet,* dass** in dem von geöffneten Backzangen (53) durchlaufenen Bahnabschnitt (52) zumindest eine Beschickungsstation (54) für Streugut vor der Beschickungsstation (55) für die Backmasse angeordnet ist.

14. Backvorrichtung nach Anspruch 12, ***dadurch gekennzeichnet,* dass** in dem von geöffneten Backzangen (6) durchlaufenen Bahnabschnitt (10a) der Beschickungsstation (22) für die Backmasse zumindest eine Beschickungsstation (23) für Streugut nachgeordnet ist.

15. Backvorrichtung nach Anspruch 12, ***dadurch gekennzeichnet,* dass** in dem von geöffneten Backzangen (61) durchlaufenen Bahnabschnitt (60) vor der Beschickungsstation (63) für die Backmasse zumindest eine Beschickungsstation (62) für Streugut und nach der Beschickungsstation (63) für die Backmasse zumindest eine weitere Beschickungsstation (62a) für Streugut angeordnet ist.

16. Backvorrichtung nach einem der Ansprüche 12 - 15, ***dadurch gekennzeichnet,* dass** die Beschickungsstation (23) für Streugut mit einer Streuvorrichtung (30) versehen ist, die einen die Backzangenbahn (9) in Querrichtung übergreifenden Ausleger (31) besitzt, der einen oberhalb der Bahn der Backzangen (6) angeordneten Streukopf (32) für die Abgabe von Streugut trägt.

17. Backvorrichtung nach einem der Ansprüche 12 - 15, ***dadurch gekennzeichnet,* dass** in der Beschickungsstation für Streugut eine neben der Umlaufbahn der Backzangen angeordnete, parallel zur Bahn der Backzangen hin und her bewegbare, mit den Backzangen vorübergehend synchron mitbewegbare Streuvorrichtung vorgesehen ist, die einen die Backzangenbahn in Querrichtung übergreifenden Ausleger besitzt, der einen oberhalb der Bahn der Backzangen angeordneten Streukopf für die Abgabe von Streugut trägt.

18. Backvorrichtung nach Anspruch 16 oder 17, ***dadurch gekennzeichnet,* dass** die Streuvorrichtung (30) zumindest eine das Streugut in einen fließfähigen Förderstrom verwandelnde Fördereinrichtung (39, 42) aufweist.

19. Backvorrichtung nach einem der Ansprüche 16 - 18, ***dadurch gekennzeichnet,* dass** die Streuvorrichtung (30) eine dem Streukopf (32) vorgelagerte Dosiereinrichtung für das Streugut enthält.

20. Backvorrichtung nach Anspruch 19, ***dadurch gekennzeichnet,* dass** die Streuvorrichtung (30) eine intermittierend arbeitende, mit einer Waage (40) versehene Dosiereinrichtung für das Streugut besitzt, der eine das dosierte Streugut in einen fließfähigen Förderstrom verwandelnde Fördereinrichtung (42) nachgeordnet ist.

21. Backvorrichtung nach einem der Ansprüche 16 - 20, ***dadurch gekennzeichnet,* dass** der Streukopf (32) mit einer Leiteinrichtung (33, 34, 35) für das Streugut versehen ist.

22. Backvorrichtung nach Anspruch 21, ***dadurch gekennzeichnet,* dass** die Leiteinrichtung (33, 34, 35) mit das Streugut über den zu bestreuenden Bereich verteilenden Leitelementen (33,34) versehen ist.

23. Backvorrichtung nach Anspruch 22, ***dadurch gekennzeichnet,* dass** die Leitelemente (33, 34) als horizontal ausgerichtete Stäbe ausgebildet sind.

24. Backvorrichtung nach Anspruch 22, ***dadurch gekennzeichnet,* dass** die Leiteinrichtung ein vorzugsweise horizontal angeordnetes Streugitter besitzt.

25. Backvorrichtung nach einem der Ansprüche 21 - 24, ***dadurch gekennzeichnet,* dass** die Leiteinrichtung mit einer den Umriss des zu bestreuenden Bereiches definierenden Umrandung (35) versehen ist.

26. Anlage zum Herstellen von dünnwandigen, aus flachen, plastisch verformbaren Vorprodukten geformten Formkörpern mit einer Backvorrichtung (1) zum Herstellen der flachen, plastisch verformbaren Vorprodukte und einer mit der Ausgabestation (21) der Backvorrichtung (1) gekoppelten Umformmaschine (3) zum mechanischen Umformen der flachen, plastisch verformbaren Vorprodukte in dünnwandige Formkörper, wobei die in der Backvorrichtung (1) in auf- und zumachbaren Backzangen (6) aufgenommenen, auf die Gestalt der flachen Vorprodukte abgestellten, auf- und zumachbaren Backformen in einem Gestell (8) einen geschlossenen Kreislauf durchlaufen und wobei in der Backvorrichtung (1) entlang der Umlaufbahn (9) der Backzangen (6) eine Beschickungsstation (22) zum Einbringen von Backmasse in die geöffneten Backformen, ein Backraum zum Backen der flachen Vorprodukte und eine Ausgabestation (21) zum Ausgeben der gebackenen, flachen Vorprodukte aus den geöffneten Backformen angeordnet sind, ***dadurch gekennzeichnet,* dass** in der Backvorrichtung (1) an der Umlaufbahn (9) der Backzangen (6) ein von geöffneten Backzangen (6) durchlaufener Bahnabschnitt (10a) vorgesehen ist, in dem die Beschickungsstation (22) für die Backmasse und zumindest eine Beschickungsstation (23) zum Einbringen von Streugut in die geöffneten Backformen angeordnet sind.

27. Anlage nach Anspruch 26, ***dadurch gekennzeichnet,* dass** in dem von geöffneten Backzangen (53) durchlaufenen Bahnabschnitt (52) zumindest eine Beschickungsstation (54) für Streugut vor der Beschickungsstation (55) für die Backmasse angeordnet ist.

28. Anlage nach Anspruch 26, ***dadurch gekennzeichnet,* dass** in dem von geöffneten Backzangen (6) durchlaufenen Bahnabschnitt (10a) der Beschickungsstation (22) für die Backmasse zumindest eine Beschickungsstation (23) für Streugut nachgeordnet ist.

29. Anlage nach Anspruch 26, ***dadurch gekennzeichnet,* dass** in dem von geöffneten Backzangen (61) durchlaufenen Bahnabschnitt (60) vor der Beschickungsstation (63) für die Backmasse zumindest eine Beschickungsstation (62) für Streugut und nach der Beschickungsstation (63) für die Backmasse zumindest eine weitere Beschickungsstation (62a) für Streugut angeordnet ist.

30. Anlage nach einem der Ansprüche 26 - 29, ***dadurch gekennzeichnet,* dass** die Beschickungsstation (23) für Streugut mit einer Streuvorrichtung (30) versehen ist, die einen die Backzangenbahn (9) in Querrichtung übergreifenden Ausleger (31) besitzt, der einen oberhalb der Bahn der Backzangen (6) angeordneten Streukopf (32) für die Abgabe von Streugut trägt.

31. Anlage nach einem der Ansprüche 26 - 29, ***dadurch gekennzeichnet,* dass** in der Beschickungsstation für Streugut eine neben der Umlaufbahn der Backzangen angeordnete, parallel zur Bahn der Backzangen hin und her bewegbare, mit den Backzangen vorübergehend synchron mitbewegbare Streuvorrichtung vorgesehen ist, die einen die Backzangenbahn in Querrichtung übergreifenden Ausleger besitzt, der einen oberhalb der Bahn der Backzangen angeordneten Streukopf für die Abgabe von Streugut trägt.

32. Anlage nach Anspruch 30 oder 31, ***dadurch gekennzeichnet,* dass** die Streuvorrichtung (30) zumindest eine das Streugut in einen fließfähigen Förderstrom verwandelnde Fördereinrichtung (39, 42) aufweist.

33. Anlage nach einem der Ansprüche 30 - 32, ***dadurch gekennzeichnet,* dass** die Streuvorrichtung (30) eine dem Streukopf (32) vorgelagerte Dosiereinrichtung für das Streugut enthält.

34. Anlage nach Anspruch 33, ***dadurch gekennzeichnet,* dass** die Streuvorrichtung (30) eine intermittierend arbeitende, mit einer Waage (40) versehene Dosiereinrichtung für das Streugut besitzt, der eine das dosierte Streugut in einen fließfähigen Förderstrom verwandelnde Fördereinrichtung (42) nachgeordnet ist.

35. Anlage nach einem der Ansprüche 30 - 34, ***dadurch gekennzeichnet,* dass** der Streukopf (32) mit einer Leiteinrichtung (33, 34, 35) für das Streugut versehen ist.

36. Anlage nach Anspruch 35, ***dadurch gekennzeichnet,* dass** die Leiteinrichtung (33, 34, 35) mit das Streugut über den zu bestreuenden Bereich verteilenden Leitelementen (33, 34) versehen ist.

37. Anlage nach Anspruch 36, ***dadurch gekennzeichnet,* dass** die Leitelemente (33, 34) als horizontal ausgerichtete Stäbe ausgebildet sind.

38. Anlage nach Anspruch 36, ***dadurch gekennzeichnet,* dass** die Leiteinrichtung ein vorzugsweise horizontal angeordnetes Streugitter besitzt.

39. Anlage nach einem der Ansprüche 36 - 38, ***dadurch gekennzeichnet,* dass** die Leiteinrichtung mit einer den Umriss des zu bestreuenden Bereiches definierenden Umrandung (35) versehen ist.

## Claims

1. Method for producing thin-walled moulded bodies, in which a baked product corresponding to the shape of the moulded bodies is produced from a dough in an openable and closable baking mould matched to the shape of the moulded bodies, wherein the lower mould part and upper mould part are located opposite one another when the mould is closed and define between themselves an inner baking cavity corresponding to the shape of the moulded bodies, the method comprising the following steps:
(1) opening the baking mould,
(2) placing a dough in the baking mould,
(3) closing the baking mould,
(4) baking the dough in the closed baking mould, thereby producing a baked moulded body from the dough spreading out in the inner baking cavity of the baking mould to fill the inner baking cavity,
(5) opening the baking mould and
(6) removing the baked, thin-waited moulded body from the opened baking mould,
**characterised in that** sprinkling material is introduced in the opened baking mould and is baked together with the dough with the baking mould closed to form a moulded body that fills the inner baking cavity, wherein the sprinkling material is baked into the thinwailed moulded body at least at one point on the surface.

2. Method according to claim 1, **characterised in that** the sprinkling material is applied to the lower mould part before the dough and is covered with dough.

3. Method according to claim 1, **characterised in that** the dough is applied to the lower mould part before the sprinkling material and is covered with sprinkling material at least at one point.

4. Method according to claim 1, **characterised in that** first the dough is baked in the closed baking mould to form a part-baked body of dough which is inherently stable and that sprinkling material is applied to at least one point on the part-baked body of dough during a temporary opening of the baking mould and the baking of the body of dough carrying the sprinkling material is completed with the baking mould closed.

5. Method for producing thin-walled moulded bodies, wherein a flat semi-finished produit that is plastically deformable when warm from baking is baked on a heated baking surface from a baking dough containing a plasticiser that becomes effective when heated, the semi-finished product is removed from the baking surface, mechanically reshaped while warm from baking and processed into individual moulded bodies which take on an inherently stable consistency when cooled to ambient temperature, **characterised in that** sprinkling material is baked together with the dough on the heated baking surface to form a flat semi-finished product that is plastically deformable when warm from baking and **in that** the flat semi-finished product carrying the sprinkling material is removed from the baking surface, mechanically reshaped and processed into moulded bodies.

6. Method according to claim 5, **characterised in that** sprinkling material is placed on the heated baking surface before the dough and is covered by dough.

7. Method according to claim 5, **characterised in that** the dough is placed on the heated baking surface before the sprinkling material and is then covered with sprinkling material at least at one point.

8. Method according to one of claim 5 to 7, **characterised in that** the dough is applied in strips and is baked together with the sprinkling material to form a flat semi-finished product strip which is plastically deformable when warm from baking and carries sprinkling material on at least parts of its upper and/or lower surface, and **in that** the plastically reformable semi-finished product strip carrying the sprinkling material is removed from the baking surface, mechanically reshaped and processed into individual moulded bodies which take on an inherently stable consistency when cooled to ambient temperature.

9. Method for producing thin-walled moulded bodies, in which a flat, plastically deformable semi-finished product is produced from a dough containing a plasticiser that becomes effective when heated, in an openable and closable baking mould wherein the upper and lower baking plates are located opposite one another when the mould is closed and define between themselves a flat baking cavity which is laterally open at least in parts, the method comprising the following steps:
(1) opening the baking mould,
(2) placing the dough in the baking mould,
(3) closing the baking mould,
(4) baking the dough in the closed baking mould, thereby producing a baked flat semi-finished product from the dough spreading out between the two baking plates, said semi-finished product abutting on the two baking plates and being plastically deformable when warm from baking,
(5) opening the baking mould,
(6) removing the flat, plastically deformable semi-finished product from the baking mould,
(7) mechanically forming the flat, plastically deformable semi-finished product into the shape of the moulded body, and
(8) leating the plastically deformable semi-finished product to harden,
**characterised in that**, after the opening of the baking mould or after the introduction of the dough, sprinkling material is introduced into the baking mould and the sprinkling material is baked together with the dough in an uninterrupted baking process with the baking mould closed, to form a flat semi-finished product carrying sprinkling material which is plastically deformable when warm from baking, which is mechanically shaped after removal from the baking mould into a moulded body carrying sprinkling material and which is left to harden as a moulded body carrying sprinkling material.

10. Method according to claim 9, **characterised in that** first sprinkling material is applied to the lower baking plate of the opened baking mould and then the sprinkling material is covered with dough.

11. Method according to claim 9, **characterised in that** first dough is applied to the lower baking plate of the opened baking mould and then the dough is covered with sprinkling material at least at one point.

12. Baking apparatus (1) for producing thin-wailed moulded bodies, wherein openable and closable baking moulds in a rack (8) held in openable and closable baking tongs (6) travel in a closed circuit, wherein a charging station (22) for placing dough into the opened baking moulds, a baking chamber for baking the moulded bodies, and a delivery station (21) for delivering the baked moulded bodies from the opened baking moulds are arranged in the baking apparatus along the travel path (9) of the baking tongs (6), **characterised in that** on the travel path (9) of the baking tongs (6) is provided a path section (10a) travelled by opened baking tongs (6), in which the charging station (22) for the dough and at least one charging station (23) for introducing sprinkling material into the opened baking moulds are arranged.

13. Baking apparatus according to claim 12, **characterised in that** in the path section (52) travelled by opened baking tongs (53), at least one charging station (54) for sprinkling material is arranged upstream of the charging station (55) for the dough.

14. Baking apparatus according to claim 12, **characterised in that** in the path section (10a) travelled by opened baking tongs (6) at least one charging station (23) for sprinkling material is arranged downstream of the charging station (22) for the dough.

15. Baking apparatus according to claim 12, **characterised in that** the path section (60) travelled by opened baking tongs (61), at least one charging station (62) for sprinkling material is arranged upstream of the charging station (63) for the dough and at least one further charging station (62a) for sprinkling material is arranged downstream of the charging station (63) for the dough.

16. Baking apparatus according to one of claims 12 to 15, **characterised in that** the charging station (23) for sprinkling material is provided with a sprinkling device (30) which comprises a beam (31) projecting transversely over the path (9) of the baking tongs, said beam carrying a sprinkler head (32) for dispensing sprinkling material which is arranged above the path for the baking tongs (6).

17. Baking apparatus according to one of claims 12 to 15, **characterised in that** in the charging station for sprinkling material is provided a sprinkling device arranged alongside the travel path for the baking tongs, movable back and forth parallel to the path of the baking tongs, intermittently movable in synchronism with the baking tongs, said sprinkling device having a beam that projects transversely over the path for the baking tongs, said beam carrying a sprinkler head for dispensing sprinkling material which is arranged above the path for the baking tongs.

18. Baking apparatus according to claim 16 or 17, **characterised in that** the sprinkler device (30) comprises at least one conveyor (39, 42) which converts the sprinkling material into a flowing delivery stream.

19. Baking apparatus according to one of claims 16 to 18, **characterised in that** the sprinkler device (30) contains a metering device for the sprinkling material, arranged in
front of the sprinkler head (32).

20. Baking apparatus according to claim 19, **characterised in that** the sprinkler device (30) has an intermittently operating metering device for the sprinkling material, equipped with a weighing scale (40), behind which is arranged a conveyor (42) that converts the metered sprinkling material into a flowing delivery stream.

21. Baking apparatus according to one of claims 16 to 20, **characterised in that** the sprinkler head (32) is provided with guide means (33, 34, 35) for the sprinkling material.

22. Baking apparatus according to claim 21, **characterised in that** the guide means (33, 34, 35) are provided with guide elements (33, 34) that distribute the sprinkling material over the area that is to be besprinkled.

23. Baking apparatus according to claim 22, **characterised in that** the guide elements (33, 34) are embodied as horizontally aligned bars.

24. Baking apparatus according to claim 22, **characterised in that** the guide means comprise a preferably horizontally arranged sprinkling grid.

25. Baking apparatus according to one of claims 21 to 24, **characterised in that** the guide means are provided with a border (35) that defines the outline of the area that is to be besprinkled.

26. Machine for the production of thin-walled moulded bodies shaped from flat, plastically deformable semi-finished products, having a baking apparatus (1) for producing the flat, plastically deformable semi-fnished products and a shaping machine (3) coupled to the delivery station (21) of the baking apparatus (1) for mechanically shaping the flat, plastically deformable semi-finished products into thin-walled moulded bodies, wherein the openable and closable baking moulds which are held in a rack (8) in in openable and closable baking tongs (6) in the baking apparatus (1) and matched to the shape of the flat semi-finished products travel along a closed circuit and wherein, along the travel path (9) of the baking tongs (6) in the baking apparatus (1), are provided a charging station (22) for introducing dough into the opened baking moulds, a baking chamber for baking the flat, semi-finished products, and a delivery station (21) for delivering the baked, flat, semi-finished products from the opened baking moulds, **characterised in that** on the travel path (9) of the baking tongs (6), in the baking apparatus (1), is provided a path section (10a) travelled by opened baking tongs (6) and in which the charging station (22) for the dough and at least one charging station (23) for introducing sprinkling material into the opened baking moulds are arranged.

27. Machine according to claim 26, **characterised in that** in the path section (52) travelled by opened baking tongs (53), at least one charging station (54) for sprinkling material is arranged upstream of the charging station (55) for the dough.

28. Machine according to claim 26, **characterised in that** in the path section (10a) travelled by opened baking tongs (6), at least one charging station (23) for sprinkling material is arranged downstream of the charging station (22) for the dough.

29. Machine according to claim 26, **characterised in that** in the path section (60) travelled by opened baking tongs (61), at least one charging station (62) for sprinkling material is arranged upstream of the charging station (63) for the dough and at least one additional charging station (62a) for sprinkling material is arranged downstream of the charging station (63) for the dough.

30. Machine according to one of claims 26 to 29, **characterised in that** the charging station (23) for sprinkling material is provided with a sprinkling device (30) which comprises a beam (31) projecting transversely over the path (9) for the baking tongs, said beam carrying a sprinkler head (32) for dispensing sprinkling material arranged above the path for the baking tongs (6).

31. Machine according to one of claims 26 to 29, **characterised in that** in the charging station for sprinkling material is provided a sprinkling device arranged alongside the travel path for the baking tongs, movable back and forth parallel to the path of the baking tongs, intermittently movable in synchronism with the baking tongs, said sprinkling device having a beam that projects transversely over the path for the baking tongs, said beam carrying a sprinkler head for dispensing sprinkling material arranged above the path for the baking tongs.

32. Machine according to claim 30 or 31, **characterised in that** the sprinkler device (30) comprises at least one conveyor (39, 42) which converts the sprinkling material into a flowing delivery stream.

33. Machine according to one of claims 30 to 32, **characterised in that** the sprinkler device (30) contains a metering device for the sprinkling material, arranged in front of the sprinkler head (32).

34. Machine according to claim 33, **characterised in that** the sprinkler device (30) has an intermittently operating metering device for the sprinkling material, equipped with a weighing scale (40), behind which is arranged a conveyor (42) that converts the metered sprinkling material into a flowing delivery stream.

35. Machine according to one of claims 30 to 34, **characterised in that** the sprinkler head (32) is provided with guide means (33, 34, 35) for the sprinkling material.

36. Machine according to claim 35, **characterised in that** the guide means (33, 34, 35) are provided with guide elements (33, 34) that distribute the sprinkling material over the area that is to be besprinkled.

37. Machine according to claim 36, **characterised in that** the guide elements (33, 34) are embodied as horizontally aligned bars.

38. Machine according to claim 36, **characterised in that** the guide means comprise a preferably horizontally arranged sprinkling grid.

39. Machine according to one of claims 36 to 38, **characterised in that** the guide means are provided with a border (35) that defines the outline of the area that is to be besprinkled.

## Revendications

1. Procédé de fabrication de corps de forme à paroi mince dans lequel est réalisé, à partir d'une masse à cuire au four, un produit cuit au four qui correspond à la forme des corps de forme, dans un moule de cuisson adapté à la forme des corps de forme, lequel peut être ouvert et fermé, dans lequel une partie inférieure de moule de cuisson et une partie supérieure de moule de cuisson sont situées en face l'une de l'autre lorsque le moule est fermé et délimitent entre elles un espace de cuisson intérieur creux qui correspond à la forme des corps de forme, le procédé comprenant les opérations suivantes :
(1) Ouverture du moule de cuisson,
(2) Introduction d'une masse à cuire au four dans le moule de cuisson,
(3) Fermeture du moule de cuisson,
(4) Cuisson de la masse à cuire au four dans le moule de cuisson fermé, un corps de forme cuit, remplissant l'espace de cuisson intérieur creux étant obtenu à partir de la masse à cuire au four qui s'expanse dans l'espace de cuisson intérieur creux du moule de cuisson,
(5) Ouverture du moule de cuisson et
(6) Prélèvement du corps de forme à paroi mince cuit hors du moule de cuisson ouvert,
**caractérisé en ce qu'**un produit dispersable est introduit dans le moule de cuisson ouvert et est cuit en même temps que la masse à cuire au four, le moule de cuisson étant fermé, un corps de forme étant obtenu, lequel remplit l'espace de cuisson intérieur creux, dans lequel le produit dispersable est cuit au moins à un emplacement de la surface, dans le corps de forme à paroi mince.

2. Procédé selon la revendication 1 **caractérisé en ce que** le produit dispersable est disposé sur la partie inférieure du moule de cuisson avant la masse à cuire au four et est recouvert de masse à cuire au four.

3. Procèdé selon là revendication 1 **caractérisé en ce que** la masse à cuire au four est disposée avant le produit dispersable sur la partie inférieure du moule de cuisson et est recouverte de produit dispersable au moins à un endroit.

4. Procédé selon la revendication 1 **caracterisé en ce que** la masse à cuire au four est d'abord cuite, le moule étant fermé, en devenant un corps de masse à cuire au four partiellement cuit, de forme stable, et **en ce que** le produit dispersable est disposé lors d'une ouverture passagère du moule de cuisson au moins à un endroit sur le corps de masse à cuire au four partiellement cuit, et **en ce que** le moule étant fermé, la cuisson du corps de masse à cuire au four portant le produit dispersable est achevée.

5. Procédé de fabrication de corps de forme à paroi mince, dans lequel, à partir d'une masse à cuire au four qui contient un plastifiant devenant actif à la chaleur, est cuit sur une surface de cuisson chauffable un produit préalable plat déformable plastiquement à l'état chaud de cuisson, lequel est retiré de la surface de cuisson, déformé mécaniquement à l'état chaud de cuisson et transformé en corps de forme individuels qui prennent une consistance de forme stable lors du refroidissement à température ambiante, ***caractérisé en ce que*** un produit dispersable est cuit en même temps que la masse à cuire au four sur la surface de cuisson chauffée, en devenant un produit préalable plat déformable plastiquement à l'état chaud de cuisson et **en ce que** le produit préalable plat, portant le produit dispersable est retiré de la surface de cuisson, déformé mécaniquement et est transformé en des corps de forme.

6. Procédé selon la revendication 5 ***caractérisé en* ce que** le produit dispersable est mis en place sur la surface de cuisson chauffée avant la masse à cuire au four et est recouvert de masse à cuire au four.

7. Procédé selon la revendication 5 ***caractérisé en ce que*** la masse à cuire au four est mise en place avant le produit dispersable sur la surface de cuisson chauffée et est ensuite recouverte de produit dispersable au moins à un endroit.

8. Procédé selon l'une des revendications 5 à 7 **caractérisé en ce que** la masse à cuire au four est disposée sous forme de bandes et est cuite avec le produit dispersable en devenant une bande de produit préalable plat qui est déformable plastiquement à l'état chaud de cuisson et qui porte un produit dispersable au moins par endroits sur son côté supérieur et/ou sur son côté inférieur, et **en ce que** le produit préalable déformable plastiquement et garni de produit dispersable est retiré de la surface de cuisson, déformé mécaniquement et transformé en corps de forme individuels qui prennent une consistance de forme stable lors du refroidissement à température ambiante.

9. Procédé de fabrication de corps de forme à paroi mince dans lequel, à partir d'une masse à cuire au four qui contient un plastifiant devenant actif à la chaleur, est réalisé un produit préalable plat, déformable plastiquement dans un moule de cuisson pouvant être ouvert et fermé, dans lequel des plaques de cuisson inférieure et supérieure se trouvent en face l'une de l'autre le moule étant fermé et délimitent entre elles un espace de cuisson creux plat qui est ouvert au moins par endroits sur le côté, le procédé comprenant les opérations suivantes :
(1) Ouverture du moule de cuisson,
(2) Introduction de la masse à cuire au four dans le moule de cuisson,
(3) Fermeture du moule de cuisson,
(4) Cuisson de la masse à cuire au four dans le moule de cuisson fermé, un produit préalable plat cuit étant obtenu à partir de la masse à cuire au four qui s'expanse entre les deux plaques de cuisson, lequel produit préalable repose sur les deux plaques de cuisson et est déformable plastiquement à l'état chaud de cuisson,
(5) Ouverture du moule de cuisson,
(6) Retrait du produit préalable plat déformable plastiquement hors du moule de cuisson,
(7) Déformation mécanique du produit préalable plat, déformable plastiquement pour lui donner la forme du corps de forme, et
(8) Solidification du corps de forme déformable plastiquement,
***caractérisé en ce* qu'**après l'ouverture du moule de cuisson ou après l'introduction de la masse à cuire au four un produit dispersable est introduit dans le moule de cuisson et **en ce que** le produit dispersable est cuit en même temps que la masse à cuire au four, selon un processus de cuisson interrompu, le moule étant fermé, en devenant un produit préalable plat, déformable plastiquement à l'état chaud de cuisson, portant du produit dispensable, qui après avoir été retiré du moule de cuisson est déformé mécaniquement et est laissé se solidifier pour devenir un corps de forme garni de produit dispersable.

10. Procédé selon la revendication 9 ***caractérisé e ce que*** du produit dispersable est d'abord disposé sur la plaque de cuisson inférieure du moule de cuisson ouvert, le produit dispersable étant ensuite recouvert de masse à cuire au four.

11. Procédé selon la revendication 9 ***caractérisé en ce que*** de la masse à cuire au four est d'abord mise en place sur la plaque de cuisson inférieur du moule de cuisson ouvert, la masse à cuire au four étant ensuite recouverte de produit dispersable au moins à un endroit.

12. Dispositifde cuisson (1) destiné à réaliser des corps de forme à paroi mince dans lequel des moules de cuisson pouvant être ouverts et fermés, reçus dans des pinces de cuisson (6) pouvant être ouvertes et fermées, se déplacent en circuit fermé dans un bâti (8), un poste d'alimentation (22) destiné à l'introduction de masse à cuire au four dans les moules de cuisson ouverts et un espace de cuisson destiné à la cuisson des corps de forme et un poste de délivrance (21) destiné à délivrer des corps de forme cuits hors des moules de cuisson ouverts, étant disposés dans le dispositif de cuisson le long du circuit (9) des pinces de cuisson (6), ***caractérisé en ce que*** sur le circuit (9) de pinces de cuisson (6) est prévue une section de circuit (10a) parcourue par des pinces de cuisson (6) ouvertes, dans laquelle section sont disposés le poste d'alimentation (22) destiné à la masse à cuire au four et au moins un poste d'alimentation (23) destiné à l'introduction de produit dispersable dans les moules de cuisson ouverts.

13. Dispositif de cuisson selon la revendication 12 ***caractérisé en ce que*** dans la section de circuit (52) parcourue par des pinces de cuisson (53) ouvertes au moins un poste d'alimentation (54) destiné au produit dispersable est disposé en amont du poste d'alimentation (55) destiné à la masse à cuire au four.

14. Dispositif de cuisson selon la revendication 12 ***caractérisé en ce que*** dans la section de circuit (10a) parcourue par des pinces de cuisson (6) ouvertes au moins un poste d'alimentation (23) destiné à du produit dispersable est disposé en aval du poste d'alimentation (22) destiné à la masse à cuire au four.

15. Dispositif de cuisson selon la revendication 12 ***caractérisé en ce que*** dans la section de circuit (60) parcourue par des pinces de cuisson ouvertes (61), en amont du poste d'alimentation (63) destiné à la masse à cuire au four est disposé au moins un poste d'alimentation (62) destiné à du produit dispersable et **en ce qu'**en aval du poste d'alimentation (63) destiné à la masse à cuire au four est disposé au moins un autre poste d'alimentation (62a) destiné à du produit dispersable.

16. Dispositif de cuisson selon l'une des revendications 12 à 15 ***caractérisé en ce que*** le poste d'alimentation (23) destiné au produit dispersable est doté d'un dispositif de dispersion (30), qui est muni d'un bras (31) qui surplombe le circuit (9) des pinces de cuisson dans le sens transversal et qui porte une tête de dispersion (32) disposée au-dessus du circuit des pinces de cuisson (6), laquelle est destinée à la délivrance de produit dispersable.

17. Dispositif de cuisson selon l'une des revendication 12 à 15 ***caractérisé en ce que*** dans le poste d'alimentation destiné à du produit dispersable est prévu un dispositif de dispersion disposé à côté du circuit des pinces de cuisson, pouvant être déplacé en va-et-vient parallèlement au parcours des pinces de cuisson, et pouvant être déplacé passagèrement en synchronisme avec les pinces de cuisson, lequel dispositif est doté d'un bras qui surplombe le circuit des pinces de cuisson dans le sens transversal et qui porte une tête de dispersion disposée au-dessus du parcours des pinces de cuisson en vue de la délivrance de produit dispersable.

18. Dispositif de cuisson selon la revendication 16 ou 17 ***caractérisé en ce que*** le dispositif de dispersion (30) présente au moins un dispositif de transport (39, 42) qui transforme le produit dispersable en un flux de transport.

19. Dispositif de cuisson selon l'une des revendications 16 à 18 ***caractérisé en ce que*** le dispositif de dispersion (30) comporte un dispositif de dosage monté en amont de la tête de dispersion (32).

20. Dispositif de cuisson selon la revendication 19 ***caractérisé en ce que*** le dispositif de dispersion (30) est doté d'un dispositif de dosage destiné au produit dispensable qui travaille en intermittence et qui est muni d'une balance (40), lequel dispositif est placé en amont d'un dispositif de transport (42) qui transforme le produit dispersable dosé en un flux de transport.

21. Dispositif de cuisson selon l'une des revendications 16 à 20 ***caractérisé en ce que*** la tête de dispersion (32) est dotée d'un dispositif de guidage (33, 34, 35) destiné au produit dispersable.

22. Dispositif de cuisson selon la revendication 21 ***caractérisé en ce que*** le dispositif de guidage (33, 34, 35) est doté d'éléments de guidage (33, 34) qui répartissent le produit dispersable au-dessus de la zone qui doit recevoir le produit dispensable.

23. Dispositif de cuisson selon la revendication 22 ***caractérisé en ce que*** les éléments de guidage (33, 34) sont conformés en barrettes orientées horizontalement.

24. Dispositif de cuisson selon la revendication 22 ***caractérisé en ce que*** le dispositif de guidage est doté d'une grille de dispersion disposée de préférence horizontalement.

25. Dispositif de cuisson selon l'une des revendications 21 à 14 ***caractérisé en ce que*** le dispositif de guidage est muni d'un bord périphérique (35) qui définit le contour de la zone qui doit recevoir le produit dispersable.

26. Installation de fabrication de corps de forme à paroi mince à partir de produits préalables plats et déformables plastiquement, comportant un dispositif de cuisson (1) destiné à la fabrication de produits préalables plats et déformables plastiquement ainsi qu'une machine de formage (3) couplée au poste de délivrance (21) du dispositif de cuisson (1), destinée à transformer mécaniquement les produits préalables plats et déformables plastiquement en des corps de forme à paroi mince, des moules de cuisson, adaptées à la forme des produits préalables plats et reçus dans des pinces de cuisson (6) disposés dans le dispositif de cuisson pouvant être ouvertes et fermées, effectuant un parcours en circuit fermé dans un bâti (8), et un poste d'alimentation (22) destiné à l'introduction de masse à cuire au four dans les moules de cuisson ouverts, le long du circuit (9) des pinces de cuisson (6) ainsi qu'un espace de cuisson destiné à la cuisson des produits préalables plats et un poste de délivrance (21) destiné à la délivrance de produits préalables plats cuits, hors des moules de cuisson ouverts, étant disposés dans le dispositif de cuisson (1), ***caractérisée en ce que*** dans le dispositif de cuisson (1) est prévue une section de circuit (10a) parcourue par des pinces de cuisson (6) ouvertes sur le circuit (9) des pinces de cuisson (6), dans laquelle sont disposés le poste d'alimentation (22) destiné à la masse à cuire au four et au moins un poste d'alimentation (23) destiné à l'introduction de produit dispersable dans les moules de cuisson ouverts.

27. Installation selon la revendication 26 *caractérisée en ce qu*'au moins un poste d'alimentation (54) destiné à du produit dispersable est disposé dans la section de circuit (52) parcourue par les pinces de cuisson ouvertes (6) en amont du poste d'alimentation (55) destiné à la masse à cuire au four.

28. Installation selon la revendication 26 ***caractérisée en ce que*** dans la section de circuit (10a), parcourue par les pinces de cuisson ouvertes (6), au moins un poste d'alimentation (23) destiné à du produit dispersble, est disposé en aval du poste d'alimentation (22) destiné à la masse à cuire au four.

29. Installation selon la revendication 26 ***caractérisée en ce que*** dans la section de circuit (60) parcourue par les pinces de cuisson ouvertes (61) au moins un poste d'alimentation (62) destiné à du produit dispersable est disposé en amont du poste d'alimentation (63) destiné à la masse à cuire au four et **en ce qu'**au moins un autre poste d'alimentation (62a) destiné à du produit dispersable est disposé en aval du poste d'alimentation (63) destiné à la masse à cuire au four.

30. Installation selon l'une des revendications 26 à 29 ***caractérisée en ce que*** le poste d'alimentation (23) destiné à du produit dispersable est équipé d'un dispositif de dispersion (30) qui est doté d'un bras (31) qui surplombe le circuit (9) des pinces de cuisson dans le sens transversal, lequel bras supporte une tête de dispersion (32) disposée au-dessus du circuit des pinces de cuisson (6) et destinée à la délivrance de produit dispersable.

31. Installation selon l'une dés revendications 26 à 29 *caractérisée en ce qu*'un dispositif de dispersion pouvant être déplacé en va-et-vient parallèlement au circuit des pinces de cuisson est prévu dans le poste d'alimentation destiné à du produit dispersable, à côté du circuit des pinces de cuisson, et pouvant être déplacé passagèrement en synchronisme avec les pinces de cuisson, lequel dispositif de dispersion est doté d'un bras qui surplombe le circuit des pinces de cuisson dans le sens transversal et qui porte une tête de dispersion, disposée au-dessus du parcours des pinces de cuisson, et destinée à la délivrance de produit dispersable.

32. Installation selon la revendication 30 ou 31 ***caractérisée en ce que*** le dispositif de dispersion (30) présente au moins un dispositif de transport (39, 42) qui transforme le produit dispersable en un flux de transport.

33. Installation selon l'une des revendications 30 à 32 ***caractérisée en ce que*** le dispositif de dispersion (30) comporte un dispositif de dosage monté en amont de la tête de dispersion (32).

34. Installation selon la revendication 33 ***caractérisée en ce que*** le dispositif de dispersion (30) est doté d'un dispositif de dosage travaillant par intermittence, muni d'une balance (40), et destiné à du produit dispersable en aval duquel est disposé un dispositif de transport (42) qui transforme du produit dispersable dosé en un flux de transport.

35. Installation selon l'une des revendications 30 à 34 ***caractérisée en ce que*** la tête de dispersion (32) est munie d'un dispositif de guidage (33, 34, 35) destiné au produit dispersable.

36. Installation selon la revendication 35 ***caractérisée en ce que*** le dispositif de guidage (33, 34, 35) est muni d'éléments de guidage (33, 34) qui répartissent le produit dispersable sur la zone qui doit recevoir le produit dispersable.

37. Installation selon la revendication 36 ***caractérisée en ce que*** les éléments de guidage (33, 34) ont une forme de barrettes orientées horizontalement.

38. Installation selon la revendication 36 ***caractérisée en ce que*** le dispositif de guidage est doté d'une grille de guidage disposée de préférence horizontalement.

39. Installation selon l'une des revendications 36 à 38 ***caractérisée en ce que*** le dispositif de guidage est muni d'un bord périphérique (35) qui délimite le contour de la zone qui doit recevoir le produit dispersable.
